# EUROPÄISCHE PATENTSCHRIFT

(11) **EP 3 871 323 B1**
(45) Veröffentlichungstag und Bekanntmachung des Hinweises auf die Patenterteilung: **10.05.2023**
(21) Anmeldenummer: 19804616.1
(22) Anmeldetag: 22.10.2019
(51) Int. Cl.: H02K 15/12, H02K 1/14, H02K 15/02

(54) **STATOR-/ROTORVORRICHTUNG FÜR ELEKTROMOTOREN UND EIN VERFAHREN ZUR HERSTELLUNG EINER KUNSTSTOFFBESCHICHTUNG EINER STATOR-/ROTORVORRICHTUNG**
STATOR/ROTOR DEVICE FOR ELECTRIC MOTORS, AND METHOD FOR PRODUCING A PLASTIC COATING OF A STATOR/ROTOR DEVICE
SYSTÈME STATOR/ROTOR POUR MOTEURS ÉLECTRIQUES ET PROCÉDÉ DE PRODUCTION D'UN REVÊTEMENT EN MATIÈRE PLASTIQUE D'UN SYSTÈME STATOR/ROTOR

(30) Priorität: 23.10.2018 DE 202018004918 U
(43) Veröffentlichungstag der Anmeldung: 01.09.2021
(73) Patentinhaber: PVS-KUNSTSTOFFTECHNIK GMBH & CO. KG, 74676 Niedernhall (DE)
(72) Erfinder: GÄRTNER, Herbert, 74238 Krautheim (DE)
(74) Vertreter: Clemens, Gerhard
(86) Internationale Anmeldenummer: PCT/DE2019/000280
(87) Internationale Veröffentlichungsnummer: WO 2020/083418

(56) Entgegenhaltungen:
- DE-A1-102004 044 136
- DE-U1-202017 006 525

## Beschreibung

### TECHNISCHES GEBIET

Die vorliegende Erfindung betrifft eine Stator-/Rotorvorrichtung für Elektromotoren mit zumindest einer oder mehreren übereinander gestapelten Stator-/Rotorpaketeinrichtung/en, wobei die Stator-/ Rotorpaketeinrichtungen jeweils als zu einer Drehachse rotationssymmetrisch ausgebildetes Bauteil ausgebildet ist/sind mit einer zentralen Innenausnehmung und mit jeweils übereinander gestapelt angeordneten ersten Einzelblechen, die ersten Einzelbleche eine rotationssymmetrische Umfangskontur mit in Umfangsrichtung in einem vorgegebenen Rasterwinkelmaß beabstandet angeordnete Vorsprungeinrichtungen aufweisen, die im übereinander gestapelten Zustand nach innen oder außen weisende Polschuhe bilden, die von einem elektrisch leitenden Stromleiter jeweils umwickelt sind und jeweils zwischen den Polschuhen in dem vorgegebenen Rasterwinkelmaß Wickelnute vorhanden sind, zumindest die Innenumfangskontur jeder Wickelnut und die Ober-, Unterseite der Polschuhe eine elektrisch isolierende gespritzte Kunststoffschicht aufweist.

Die vorliegende Erfindung betrifft weiterhin ein Verfahren zur Herstellung einer Kunststoffbeschichtung einer Stator-/Rotorvorrichtung.

### STAND DER TECHNIK

Stator-/Rotorvorrichtungen mit Stator-/Rotorpaketeinrichtungen beziehungsweise Segmenten von Elektromotorkompenten werden im Stand der Technik in einer Ausführungsvariante im Spritzgießverfahren mit Kunststoff umspritzt. Die umspritzte Kunststoffschicht erfüllt dabei die Hauptanforderungen, die Isolation von stromführenden Komponenten zu metallischen Bau- oder Gehäuseteilen zu gewährleisten. Zusätzlich können mit dem Spritzgießverfahren in der Formgebung Konturen erzeugt werden, die den späteren Herstellprozess des Motors unterstützen und wesentlich vereinfachen. Durch den Umspritzvorgang können daher später einzelne Montageschritte eingespart werden.

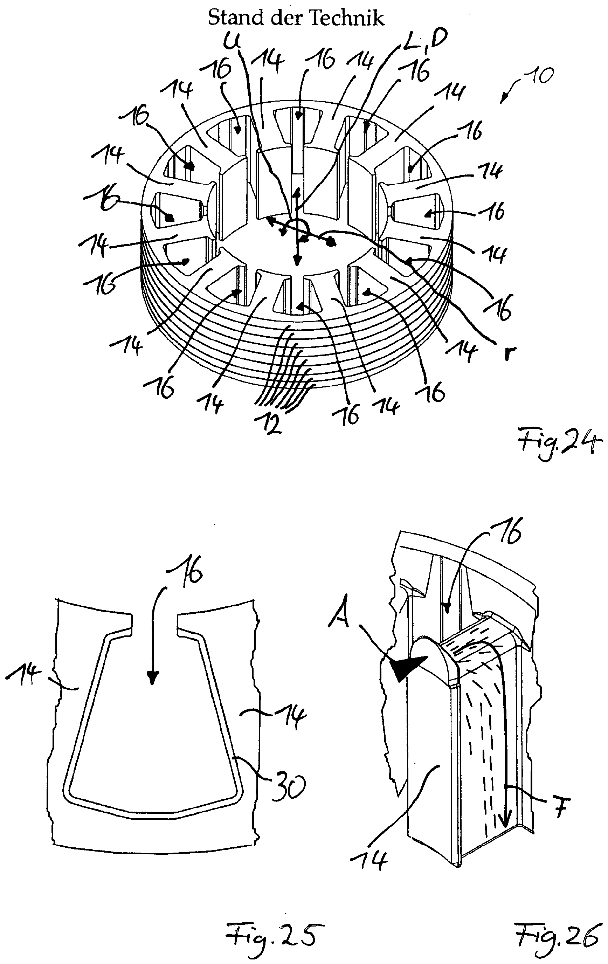

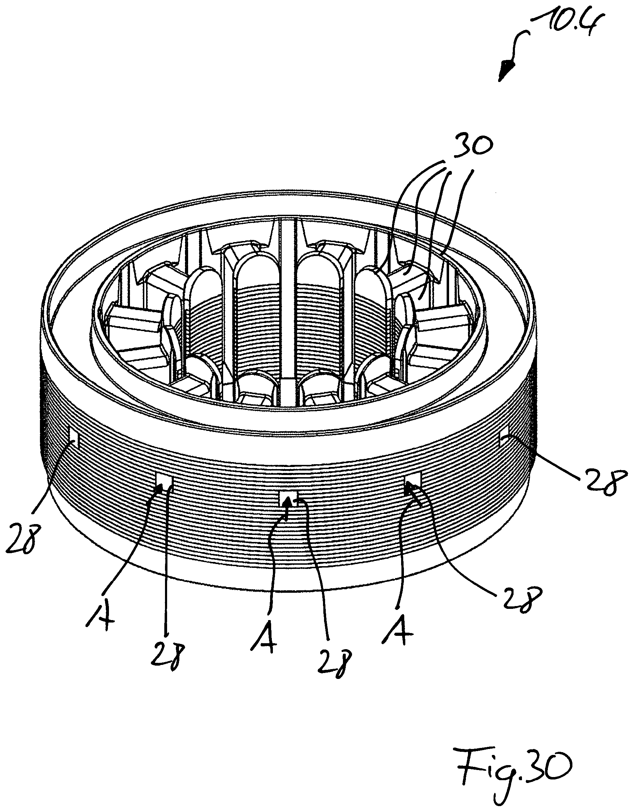

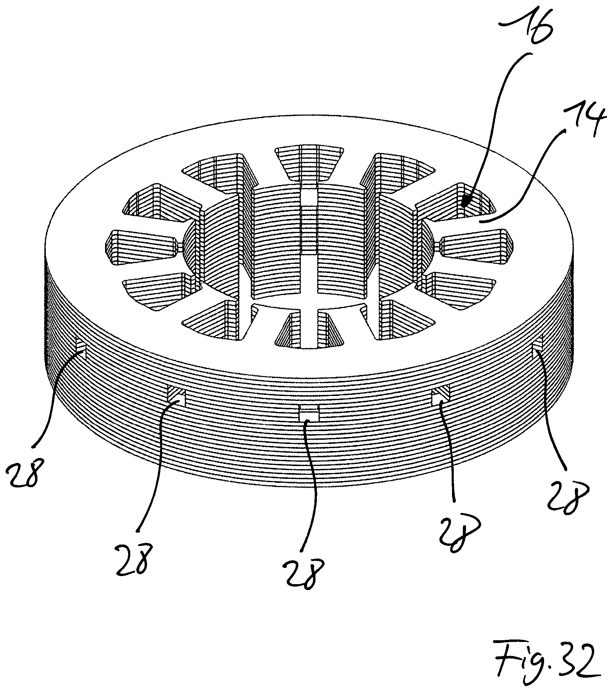

Ein derartiger Stator ist in den Figuren 24 bis 26 dargestellt. Die bekannte Statorvorrichtung weist ein Paket 10 (Statorpaketeinrichtung) aus gestanzten oder gelaserten Einzelblechen 12 mit einer jeweils entsprechenden Kontur auf, die kongruent übereinander gestapelt und dann zusammengefügt werden. Die Stator-/Rotorpaketeinrichtung 10 ist als zu einer als Drehachse D rotationssymmetrisch ausgebildetes Bauteil ausgebildet und besteht wie erwähnt aus übereinander kongruent gestapelten Einzelblechen 12. Die Einzelbleche 12 weisen eine rotationssymmetrische Umfangskontur mit in Umfangsrichtung U in einem vorgegebenen Rastermaß beabstandet angeordnete Vorsprungeinheiten auf, die die im übereinander gestapelten Zustand im dargestellten Ausführungsbeispiel nach innen weisende Polschuhe 14 bilden, die nachfolgend von einem elektrisch leitenden Draht jeweils umwickelt sind (in den Figuren 30 bis 32 nicht dargestellt). Jeweils zwischen den Polschuhen 14 sind Wickelnute 16 vorhanden, wobei im Endzustand unter anderem die Innenumfangskontur jeder Wickelnut 16 eine elektrisch isolierende gespritzte Kunststoffschicht 30 aus thermoplastischen oder duroplastischen Material aufweist. In einer alternativen nicht dargestellten Ausführungsform können die Polschuhe 14 auch nach außen weisen.

Diese Einzelbleche 12 werden in vielen Fällen aus Blechdicken von 0,12 bis 0,50 mm gefertigt, im Motorenbau finden in Abhängigkeit von der Motorengröße und Motorenart auch dickere Bleche Verwendung. Um die gewünschten magnetischen Eigenschaften zu gewährleisten, stehen hierfür Bleche 12 aus speziellem Stahl-/ Eisenlegierungen mit bestimmten elektromagnetischen Eigenschaften zur Verfügung. Die aufgerollten Blechstreifen (Coils) mit entsprechender Dicke werden beispielsweise durch ein Stanzwerkzeug geführt und dabei Einzelbleche 12 mit entsprechenden Konturen ausgestanzt. Es sind auch andere Herstellverfahren wie beispielsweise Lasern oder dergleichen Schneidverfahren bekannt.

In parallel dazu verlaufenden Prozessen werden diese ausgestanzten Einzelbleche 12 gestapelt und durch verschiedene mögliche Fügeprozesse zu einem stabilen Paket 10 gefügt. Es ist jedoch auch möglich, dass lose gestapelte Einzelbleche 12 in der Weiterverarbeitung Anwendung finden. Bei der losen Weiterverarbeitung werden je nach gewünschter Pakethöhe eine bestimmte Anzahl Einzelbleche 12 (loser Stapel) abgegriffen und im nachfolgenden Prozess zu einem zusammenhängenden Körper gefügt.

Die Verarbeitung von Einzelblechstapeln macht insbesondere im Spritzgießverfahren Sinn, da erst der eingespritzte und bereits erstarrte Kunststoff dem Blechstapel eine starre Paketstruktur verleiht. Alternativ ist es auch bekannt, dass lose Blechstapel vor dem Umspritzen oft durch zusätzliche Arbeitsgänge zum Beispiel in verschiedenen Verschweißverfahren zu einem stabilen Körper gefügt werden.

Bevor die Stator-/Rotorpaketeinrichtungen 10 mit Kupferdraht bewickelt werden können, ist eine isolierende Schicht zwischen Kupferdraht und der blanken Metalloberfläche der Stator-/Rotorpaketeinrichtung 10 erforderlich (die umwickelten Kupferdrähte sind in den Figuren 30 bis 32 nicht dargestellt).

Vor der Einführung der Kunststoffspritztechnologie wurden im Rahmen der Elektromotorenfertigung anstelle der isolierenden Kunststoffschicht isolierende papierartige Werkstoffe eingesetzt, die auch heute noch in technisch ausgereifter Form verwendet werden. Hierbei wird ein der Wickelnut angepasster und angeformter Konturabschnitt dieses Isolationspapiers in jede Wickelnut eingeschoben. Das Papiermaterial übernimmt die Aufgabe der Isolation in der Wickelnut auf der gesamten Pakethöhe. Dabei sind der Länge des Papierstreifens in der Herstellung theoretisch keine Grenze gesetzt. Das bedeutet, dass die Wickelnut eines extrem hohen Motors isoliert werden könnte. Die Verwendung von Isolationspapier eröffnet auch die Möglichkeit eine sehr geringe Isolationsdicke umzusetzen. Die Dicke der Isolationsschicht ist wesentlich, da je dünner die Isolationsschicht ausgebildet ist, desto mehr Kupferdrähte können umwickelt werden, um damit den Füllgrad und dadurch die Leistung des Motors zu erhöhen. Diese beiden wesentlichen Vorteile des Isolationspapiers stehen in starkem Wettbewerb zu anderen Herstellungs- oder Isolationsmethoden (zum Beispiel Pulverbeschichtung). Häufig werden die Stirnflächen eines derartigen Paketes oft mit spritzgegossenen Endscheiben aus Kunststoff abgedeckt. Danach erfolgt der eigentliche Wickelvorgang. Wie oben bereits ausgeführt ist eine Hauptanforderung beim Herstellungsvorgang, eine wirtschaftlich umsetzbare elektrische Isolierung der Stator-/Rotorpaketeinrichtung. Dafür eignet sich auch ganz besonders das Spritzgießverfahren. Der Kunststoff übernimmt die Funktion der Isolation des Pakets zur Wicklung oder anderen stromführenden Elementen in der Motorenbaugruppe. Speziell wirkt die Kunststoffschicht als Isolationsschicht zwischen der Metalloberfläche des Blechpakets und der eingebrachten Kupferwicklung der Stromleitern, die als Profile oder als Drähte, beispielsweise aus Kupfer oder Aluminium oder anderen leitenden Metalle, ausgebildet sein können.

Zusätzlich und als wesentlicher Vorteil gegenüber der Papierisolation mit Endscheibentechnik erfüllt der eingespritzte Kunststoff die Funktion als Konstruktionswerkstoff für Funktions- oder Montageelemente am umspritzten Rohpaket. Sowohl die Isolation als auch die Funktionselemente werden beim Kunststoffspritzvorgang in einem Arbeitsgang angeformt. Der Anteil für nachfolgende Montagearbeiten reduziert sich dadurch maßgeblich, da die meisten isolierenden Elemente auch viele montageunterstützende Elemente in einem Arbeitsgang bereits mit angeformt sind.

Ein Ziel der Kunststoffspritztechnik ist dabei, dass insbesondere Nutbereiche des Paketes, deren benachbarte Polschuhe nachfolgend mit Kupfer bewickelt werden, möglichst dünn mit Kunststoff ausgespritzt werden, um einen maximal großen Wickelraum für den Kupferdraht zu erreichen. Das bedeutet eine maximale Anzahl an Kupferwindungen, die in den Wickelnuten untergebracht werden können, um die Effizienz und den Wirkungsgrad des Elektromotors zu erhöhen. Ein weiterer vorteilhafter Effekt der umspritzten Isolierschicht ist der bessere Wärmeübergang (der Verlustenergie) während des Motorbetriebs vom Kupfer über den Kunststoff in das Paket, da kein Luftspalt zwischen Isolierung und Paketoberfläche vorhanden ist und zudem eine wärmeleitender Kunststoff eingesetzt werden kann.

In bekannter Art und Weise werden die Stator-/Rotorpaketeinrichtungen oder Segmente der genannten Komponenten im Spritzgießverfahren hergestellt und in der Regel an einer Stirnseite des Pakets angespritzt. Diese Anspritzposition ergibt sich meist aus der Paketkontur und der Wandstärkengestaltung des Kunststoffes. Ein Grundsatz beim Spritzgießen ist, möglichst an Positionen mit großen Wandstärken anzuspritzen. Diese sind vorrangig an den Stirnseiten des Statorpaketes zu finden.

Beim Herstellungsvorgang wird das Paket, welches auch Rohpaket genannt wird, in das offene Spritzgießwerkzeug eingelegt, danach wird das Spritzgießwerkzeug geschlossen. Jetzt wird der bereits in der Spritzgießmaschine aufgeschmolzene Kunststoff durch einen oder mehrere Angußpunkte in die Formkavität eingespritzt und füllt die konturgebenden Hohlräume der Kavität, die dem gewünschten Kunststoffdesign des umspritzten Pakets entsprechen. Nach dem Erstarren und Abkühlen des Kunststoffes wird das fertige Paket entformt.

In der Spritzgießtechnik ist allgemein bekannt, dass der aufgeschmolzene Kunststoff während des Einspritzvorgangs beziehungsweise während seiner quellstromartigen Fortbewegung in der Kavität Wärme an die kalte Wand der Kavität abgibt. Dies hat weitreichende Nachteile zur Folge. Insbesondere Konturbereiche, wo die Schmelze ins Stocken kommt und keine neue Schmelze beziehungsweise Wärme im Zentrum des Wandquerschnittes (plastische Seele) nachfließt, erstarrt die Schmelze über die Wandstärke noch schneller. Das bedeutet, dass die Schmelze auf ihrem Weg durch die Kavität zunehmend an Temperatur verliert und dadurch die Viskosität der Schmelze gleichzeitig ansteigt.

Nach einem bestimmten Fließweg beziehungsweise nach entsprechender Zeit kommt bei dem bekannten Verfahren der Schmelzstrom ins Stocken, da in Teilbereichen der Kavität bereits kritisch niedrige Schmelztemperaturen erreicht sind. Grundsätzlich ist die so genannte maximale Fließweglänge von mehreren Faktoren abhängig:
- Massetemperatur des Kunststoffs,
- Viskosität eines Kunststoffes,
- Füllstoffanteil und Füllstoffart des Kunststoffs,
- Kunststoffwandstärke entlang des Fließweges,
- Oberflächentemperaturen von Spritzgießwerkzeug und Paket/ Segment (Einlegeteil),
- verfügbarer Einspritzdruck der Spritzgießmaschine,
- Einspritzgeschwindigkeit und
- Wärmekapazität des Kunststoffes.

Die bekannte einseitige/stirnseitige Anspritzung begrenzt die mögliche umspritzbare Pakethöhe wesentlich. Um bisher positiven Einfluss auf eine maximale Fließweglänge zu nehmen, wurde im Wesentlichen mit den oben genannten Faktoren gearbeitet, die entsprechend auf die jeweils vorhandene Einspritzsituation in Bezug auf die Geometrie des Pakets abgestimmt worden ist.

In Hinblick auf den zunehmenden Anteil an Elektrofahrzeugen mit entsprechenden Leistungsanforderungen gewinnen zukünftig Elektromotoren mit Pakethöhen von > 100 mm zunehmend an Bedeutung.

Mit den bisher bekannten Möglichkeiten des Spritzgießens können Pakethöhen dieser Größenordnung bei gleichzeitig minimaler Wandstärke im Wickelnutbereich kaum erreicht werden. Die Grenze dazu bildet im Wesentlichen die maximale Fließweglänge des Kunststoffes.

Um diese physikalische Grenze der maximalen Fließweglänge bei den bekannten Verfahren zu umgehen, wurden bisher verschiedene Vorgehensweisen angewendet, um auch höhere Bauteile zu umspritzen, nämlich zum Beispiel Anspritzen von beiden Seiten des Paketes oder Anspritzen an mehreren Punkten entlang der Wickelnuten.

In den genannten Fällen entstehen an mehreren Positionen des Paketes Fließfronten, die sich je nach Position in verschiedene Richtungen ausbreiten. Als Fließfront bezeichnet man die vorderste Position des sich ausbreitenden Quellstromes des Kunststoffes.

Im Verlauf des Einspritzvorgangs stoßen diese Schmelzefronten aufeinander und verbinden sich mehr oder weniger gut miteinander, es entstehen Bindenähte. Insbesondere in dünnwandigen Kunststoffbereichen, wie beispielsweise der Wickelnut, ist die Bildung von Bindenähten als besonders kritisch anzusehen, da sich aufeinandertreffende Schmelzefronten kaum verbinden, da diese relativ kalt aufeinandertreffen. Dies hat zur Folge, dass bei einer nachfolgenden durchzuführenden Isolationsprüfung diese Positionen sehr stark durchschlagsgefährdet sind, da in diesem Bereich kein homogenes Kunststoffgefüge entsteht. In ungünstigen Fällen entstehen je nach Design des Kunststoffanteils durch ungünstiges Füllverhalten sogar Lufteinschlüsse. Lufteinschlüsse sind Kunststoff- Fehlstellen durch eingeschlossene, extrem komprimierte Luft aus der Formkavität. Dadurch entstehen kleine Löcher im Kunststoff. Bindenähte und Lufteinschlüsse sind im allgemeinen als Schwachstelle in der Spritzgießtechnik zu sehen. Gefügestrukturen und Faserorientierungen zeigen eine geringere Belastbarkeit. Bei mechanischer Beanspruchung zeigen sich Bindenähte oft als Sollbruchstelle, die die Funktion sehr stark beeinträchtigen oder zu einem Ausfall führen können. Bei elektrischer Belastung, beispielsweise im Rahmen von Hochspannungs- oder Durchschlagsprüfungen gibt es daher bei den bekannten Kunststoff umspritzten Paketen ein punktuelles Versagen der Isolationsschicht beziehungsweise der Kunststoffwand. Darüber hinaus wirken sich die entstehenden Bindenähte und Lufteinschlüsse auch negativ auf die geforderte Materialdichtheit aus. Insoweit steht das Bestreben, im Rahmen der geforderten dünnwandigen Wickelnutbereichen derartige Bindenähte und Lufteinschlüsse aus isolationstechnischer Sicht absolut zu vermeiden.

In der industriellen Verarbeitung werden Blechpakete für Elektromotoren bei der Herstellung meist zu einteiligen Paketkörpern gefügt. Dabei werden die einzelnen Bleche durch spezielle Verbindungstechniken aneinander gefügt und zu einem zusammenhängenden Körper verarbeitet. Als Verbindungstechniken werden zum Beispiel Stanzpaktieren, Laserschweißen sowie verschiedene Klebetechniken wie das Fügen durch Backlack oder Cyan-Acrylat-Klebstoffen eingesetzt.

Durch diese Fügeverfahren der Einzelbleche zu einem Paket entsteht ein mehr oder weniger großer Symmetriefehler, der sich als Drall, Versatz oder Schrägstand vom unteren zum oberen Blech hin entwickelt. Durch diesen Formfehler lassen sich hohe Pakete zunehmend nur schwierig oder gar nicht in ein symmetrisch korrektes Spritzgießwerkzeug einlegen. Die Konturbereiche zur Aufnahme des Rohpaketes im Spritzgießwerkzeug lassen Symmetrieabweichungen von Paketen nur in begrenzter Größe zu. Durch die Steifigkeit des Paketes ist keine flexible Anpassung an die formgebende Kontur des Spritzgießwerkzeuges möglich, so dass es insbesondere beim Umspritzen hoher Statorpakete zu Schwierigkeiten kommen kann.

Um den Einfluss dieses Symmetriefehlers möglichst gering zu halten, können beispielsweise mehrere niedere Einzelpakete zu einem hohen Gesamtpaket zusammen gestapelt werden und in dem Spritzgießprozess als Gesamtpaket umspritzt werden. In diesem Zusammenhang ist eine Verbesserung der deutschen Gebrauchsmustermusterschrift DE 20 2017 006 525 U1 zu entnehmen, in der offenbart ist, dass in einem Teilpaket übereinander gestapelter Einzelbleche im Nutgrund eine durchgehende Ausnehmung ausgestanzt ist, die einen Anspritzkanal bildet, der mit der Kunststoffschicht in Kommunikationsverbindung steht. Dieser Anspritzkanal kann je nach Anordnung des Teilblechpakets in unterschiedlichen Positionen in Längsrichtung der Stator-/Rotorpaketeinrichtung positioniert werden.

Eine weitere Optimierung bezüglich der Qualität des Kunststoffspritzvorgangs ist in der deutschen Gebrauchsmusterschrift DE 20 2017 006 523 U1 offenbart. Die dort beschriebene Stator-/Rotorpaketeinrichtung offenbart einen in Längsrichtung verlaufenden Fließkanal, der im Nutgrund der Winkelnute angeordnet ist und mit dem Anspritzkanal/den Anspritzkanälen im Kommunikationsverbindung steht. Dieser Fließkanal/ diese Fließkanäle bilden eine Querschnittserweiterung im Zusammenhang mit der einzuspritzenden Kunststoffschicht und ermöglichen einen optimaleres Fließverhalten.

Bei der Herstellung von Paketen für Stator-/Rotorpaketeinrichtungen werden bei den Paketherstellern die Stator- und Rotorbleche meist mit Folgeschnittwerkzeugen hergestellt.

Dabei werden Teilkonturen eines Blechschnittes in verschiedenen Stufen ausgestanzt. Der Blechstreifen wird dabei durch das Stanzwerkzeug geführt und in nacheinander folgenden Stanzschritten bearbeitet.

Im letzten Schnitt wird das Rotor-oder Statorblech in der Regel vom Blechstreifen getrennt. In nachfolgenden Bearbeitungsschritten des Stanzwerkzeuges ist es möglich die einzelnen Bleche aufzustapeln und dabei miteinander durch zum Beispiel Stanzpaketieren, einem üblichen Fügeverfahren zu einem starren Paket, zu verbinden. Die Stanztechnik bei Folgeschnittwerkzeugen ermöglicht aber eine Reihe von technischen Möglichkeiten den Paketaufbau aus geschichteten Einzelblechen individuell zu gestalten. So können z.B. im Folgeschnittwerkzeug eine oder mehrere zusätzliche Stanzpositionen eingefügt werden, die bei Bedarf dazu geschaltet werden und Sonderkonturen stanzen. Dabei kann im Produktionsablauf in einem festgelegten Zyklus, bzw. nach einer bestimmter Anzahl von Blechen eines Paketaufbaus Sonderbleche/ -konturen gestanzt werden.

Dadurch ist es möglich einen Paketaufbau mit individueller Schichtung verschiedener Bleche beziehungsweise Blechkonturen zu erzeugen.

Das bedeutet, eines oder mehrere nacheinander folgende Bleche verschiedener Schnitte können wiederholbar zu einem Paket aufgebaut werden und nachfolgend durch stanzpaketieren zu einem festen Paket gefügt werden.

Zusätzlich ist es möglich in Folgeschnittwerkzeugen Dreheinheiten zu platzieren. Ausgeschnittene Bleche können auf Wunsch mit definiertem Winkel gedreht werden bevor sie im weiteren Prozessablauf zum Paket gefügt werden. Dieser Prozess findet in der Stanztechnik bisher Anwendung um Summenfehler durch einseitige Blechdickenunterschiede zu kompensieren.

Somit besteht die Möglichkeit Stator-und Rotorpakete zu produzieren mit einer weitreichenden Flexibilität an integrierten Teilkonturen.

Die bereits beschriebene Symmetrieproblematik von starr gefügten Paketen mit großer Pakethöhe kann beispielsweise gelöst werden durch die direkte Verarbeitung von lose gestapelten Blechen im Spritzgießwerkzeug.

In der Praxis kann der Aufbau des Einzelblechstapels auch direkt beim Stanzer erfolgen und als "Paket in der richtigen Höhe" vorkonvektioniert werden.

Die fertigen Blechstapel können nach dem entfernen von Sicherungselementen direkt ins Spritzgießwerkzeug eingelegt werden.

Alternativ und in der Praxis auch üblich, werden Einzelbleche beim Stanzer in Stangenform aufgefädelt und als händelbare Einheiten verpackt. Hierbei wird bei der Verarbeitung von der Einzelblechstange eine bestimmte Anzahl Bleche abgegriffen und als Einzelblechstapel in der richtigen Höhe ins Spritzgießwerkzeug eingelegt.

Bei der Verarbeitung von Einzelblechen im Spritzgießwerkzeug entstehen durch den losen Aufbau des Paketstapels keine Symmetriefehler, da sich jedes Blech flexibel der Aufnahmekontur des Spritzgießwerkzeuges anpassen kann. Auf großzügiges Einlegespiel zwischen Paket und Formeinsatz das je nach Form-und Symetriefehler eines starren Pakets notwendig ist, kann hier deshalb verzichtet werden. Hohe Blechstapel aus losen geschichteten Blechen können somit ohne Klemmen ins Werkzeug eingelegt werden.

Nach dem Einlegen des Blechstapels ins Spritzgießwerkzeug liegen die geschichteten Bleche locker aufeinander. Dieser Stapel muß vor dem Einspritzvorgang verdichtet werden und während des Einspritzens verdichtet gehalten werden.

DE 10 2004 044 136 A1 offenbart:
Stator-/Rotorvorrichtung für Elektromotoren mit
- zumindest einer oder mehreren übereinander gestapelten Stator-/Rotorpaketeinrichtung/en, wobei
   - - die Stator-/Rotorpaketeinrichtungen jeweils als zu einer Drehachse (D) rotationssymmetrisch ausgebildetes Bauteil ausgebildet ist/sind,
- mit einer zentralen Innenausnehmung und mit jeweils übereinander gestapelt angeordneten ersten Einzelblechen,
   - - die ersten Einzelbleche eine rotationssymmetrische Umfangskontur mit in Umfangsrichtung in einem vorgegebenen Rasterwinkelmaß beabstandet angeordnete Vorsprungeinrichtungen aufweisen, die im übereinander gestapelten Zustand nach innen oder außen weisende Polschuhe bilden, die von einem elektrisch leitenden Stromleiter jeweils umwickelt sind und
   - - jeweils zwischen den Polschuhen in dem vorgegebenen Rasterwinkelmaß Wickelnute vorhanden sind,
   - - zumindest die Innenumfangskontur jeder Wickelnut und die Ober-, Unterseite der Polschuhe eine elektrisch isolierende Kunststoffschicht aufweist,
- wobei
- die Stator-/Rotorpaketeinrichtung zumindest ein erstes Teilblechpaket mit mehreren übereinander angeordneten Einzelblechen aufweist, die in dem nach außen/innen weisenden Innenbereich des Nutgrundes der Wickelnut zumindest eine erste nach außen/innen offene Ausnehmung mit einer ersten Tiefe in Radialrichtung aufweist, wobei die ersten Ausnehmungen jedes Einzelbleches des ersten Teilblechpaketes kongruent übereinander angeordnet sind,
- wobei die Stator-/Rotorpaketeinrichtung ein ober- oder unterseitig des ersten Teilblechpaketes angeordnetes zweites Teilblechpaket mit mehreren übereinander angeordneten Einzelblechen aufweist, die in dem dem Nutgrund der Wickelnut gegenüber liegenden Bereich, das heißt zur Innenausnehmung hin oder nach außen hin, zumindest eine weitere nach innen/außen offene Ausnehmung mit einer zweiten Tiefe in Radialrichtung aufweist, wobei die zweiten Ausnehmungen jedes Einzelblechs des zweiten Teilblechpaketes kongruent übereinander angeordnet sind,
- wobei das erste und zweite Teilblechpaket so zueinander angeordnet sind, dass sich die ersten und zweiten Ausnehmungen an derselben Umfangswinkelposition angeordnet sind und die Tiefe der ersten und zweiten Ausnehmungen so groß sind, dass sich die ersten und zweiten Ausnehmungen in einer Draufsicht gesehen bereichsweise überlappen,
- wobei ober- oder unterhalb des ersten und/oder zweiten Teilblechpakets erste Einzelbleche ohne erste und zweite Ausnehmungen angeordnet sind.

In der DE 20 2017 006 525 U1 ist eine Stator-/Rotorvorrichtung für Elektromotoren beschrieben, mit zumindest einer oder mehreren übereinander gestapelten Stator-/Rotorpaketeinrichtungen, wobei zumindest eine Stator-/Rotorpaketeinrichtung zumindest ein oder mehrere direkt übereinander kongruent gestapelte Einzelblech/ e oder Pakete aufweist, das/ die im Bereich des Nutgrundes jeder Wickelnut jeweils eine von innen nach außen oder umgekehrt durchgehende Anspritzkanalausnehmung aufweist/ aufweisen, die übereinander angeordnet einen Anspritzkanal bilden. Der Anspritzkanal ist mit der Kavität einer Kunststoffschicht beziehungsweise der Kunststoffschicht selbst direkt oder indirekt in Kommunikationsverbindung, wobei über den Anspritzkanal der Kunststoff zum Herstellen der Kunststoffschicht an der Innenwandung der Wickelnut einspitzbar/ eingespritzt ist.

### DARSTELLUNG DER ERFINDUNG

Ausgehend von dem genannten Stand der Technik liegt der vorliegenden Erfindung das technische Problem beziehungsweise die Aufgabe zugrunde, eine Stator-/Rotorvorrichtung mit Stator-/Rotorpaketeinrichtungen zur Herstellung von Elektromotoren und ein Verfahren zur Herstellung einer Kunststoffbeschichtung einer deratigen Stator-/Rotorvorrichtung anzugeben, die/das erlaubt, großen Pakethöhen im Spritzgießverfahren umspritzen zu können, wobei gleichzeitig die gestellten mechanischen, elektrischen und thermischen Anforderungen Berücksichtigung finden, bei der die im Stand der Technik bekannte Bindenaht- und Lufteinschlussproblematik weitestgehend vermieden werden kann, eine Verlängerung der Fließwege sowie eine wirtschaftliche Herstellung ermöglicht wird und gleichzeitig eine dauerhaft zuverlässige Funktion der Vorrichtung/ Einrichtung bezüglich der Qualität der gespritzten Kunststoffschicht/ Kunststoffumhüllung gewährleistet werden kann.

Die erfindungsgemäße Stator-/Rotorvorrichtung für Elektromotoren ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Stator-/Rotorvorrichtung zeichnet sich demgemäß dadurch aus, dass - die Stator-/Rotorpaketeinrichtung zumindest ein erstes Teilblechpaket mit mehreren übereinander angeordneten Einzelblechen aufweist, die in dem nach außen/innen weisenden Innenbereich des Nutgrundes der Wickelnut zumindest eine erste nach außen/innen offene Ausnehmung mit einer ersten Tiefe in Radialrichtung aufweist, wobei die ersten Ausnehmungen jedes Einzelbleches des ersten Teilblechpaketes kongruent übereinander angeordnet sind, ein ober- oder unterseitig des ersten Teilblechpaketes angeordnetes zweites Teilblechpaket mit mehreren übereinander angeordneten Einzelblechen aufweist, die in dem dem Nutgrund der Wickelnut gegenüber liegenden Bereich, das heißt zur Innenausnehmung hin oder nach außen hin, zumindest eine weitere nach innen/außen offene Ausnehmung mit einer zweiten Tiefe in Radialrichtung aufweist, wobei die zweiten Ausnehmungen jedes Einzelblechs des zweiten Teilblechpaketes kongruent übereinander angeordnet sind, wobei das erste und zweite Teilblechpaket so zueinander angeordnet sind, dass sich die ersten und zweiten Ausnehmungen an derselben Umfangs-winkelposition angeordnet sind und die Tiefe der ersten und zweiten Ausnehmungen so groß sind, dass sich die ersten und zweiten Ausnehmungen in einer Draufsicht gesehen bereichsweise überlappen, so dass ein von innen nach außen oder von außen nach innen durchgehender stufenförmiger Anspritzkanal für die Kunststoffschicht gebildet wird, ober- oder unterhalb des ersten und/oder zweiten Teilblechpakets erste Einzelbleche ohne erste und zweite Ausnehmungen angeordnet sind.

Eine besonders vorteilhafte Ausgestaltung, die eine Bildung der Stator-/Rotorpaketeinrichtung durch gestapelte erste Einzelbleche und gestapelte zweite Einzelbleche mit alternativ in Umfangswinkelrichtung wechselnden ersten und zweiten Ausnehmungen ermöglicht, zeichnet sich dadurch aus, dass die Einzelbleche als zweite Einzelbleche ausgebildet sind, die das erste und zweite Teilblechpaket bilden, wobei die ersten und zweiten Ausnehmungen jeweils an einem Einzelblech vorhanden sind, die ersten Ausnehmungen in radialer Umfangsrichtung in einem ersten Rasterwinkelmaß angeordnet sind, die zweiten Ausnehmungen in Umfangsrichtung in einem zweiten Rasterwinkelmaß angeordnet sind, wobei die ersten und zweiten Ausnehmungen alternierend außen und innen in einem Differenzrasterwinkelmaß angeordnet sind und die ersten und zweiten Rasterwinkelmaße dem zwei- oder mehrfachen des Rasterwinkelmaßes der Wickelnut entsprechen und das Differenzrasterwinkelmaß dem ein- oder mehrfachen des vorgegebenen Rasterwinkelmaßes der Wickelnut entspricht, das zweite Teilblechpaket gegenüber dem ersten Teilblechpaket um das Differenzrasterwinkelmaß verdreht angeordnet ist.

Eine weitere vorteilhafte Ausgestaltung, die eine Ausgestaltung der Stator-/Rotorpaketeinrichtung mit ersten Einzelblechen und dritten und vierten Einzelblechen ermöglicht, das heißt unter Verwendung von drei bezüglich der Austanzung unterschiedlichen Einzelblechen, zeichnet sich dadurch aus, dass das erste Teilblechpaket dritte Einzelbleche aufweist mit ersten nach außen oder innen offenen Ausnehmungen, die in Umfangsrichtung in einem ersten vorgegebenen Rasterwinkelmaß jeweils im Nutgrund der Wickelnut angeordnet sind, das zweite Teilblechpaket vierte Einzelbleche aufweist mit zweiten nach innen oder außen offenen Ausnehmungen, die in Umfangsrichtung in einem zweiten vorgegebenen Rasterwinkelmaß gegenüber dem Nutgrund angeordnet sind, wobei das erste und zweite Rasterwinkelmaß ein einfaches oder mehrfaches des vorgegebenen Rasterwinkelmaßes der Wickelnut entspricht, das zweite Teilblechpaket gegenüber dem ersten Teilblechpaket in Umfangsrichtung so positioniert ist, dass sich die ersten und zweiten Ausnehmungen in einer Draufsicht gesehen bereichsweise überlappen.

Erfindungsgemäß sind sowohl innen als auch außen genutete Rotor-/ Statoreinrichtungen mit den genannten Merkmalen ausbildbar.

Wie im Stand der Technik beschrieben, ermöglicht die Stapelung von Einzelblechen zu einem Paket jede denkbare Kombination verschiedener Blech,- beziehnungsweise Geometrievarianten. Eine flexible Änderung des Paketaufbaus zur Beeinflussung von mechanischen beziehungsweise auch magnetischen Eigenschaften des Motors / Rotors ist durch die erfindungsgemäße Lösung jederzeit möglich.

Bei der vorliegenden Erfindung wird das gedreht versetzte Stapeln kombiniert mit der vorhandenen Möglichkeit einer individuellen Schichtung von verschiedenen Blechschnitten.

In kombinierter Anwendung mit den zur Verfügung stehenden Verfahren beziehungsweise Vorrichtungen gemäß der vorliegenden Erfindung können je nach Schichtungskombination verschiedener Einzelbleche, der Querschnitt, die Position und die Anzahl der Anspritzkanalebenen flexibel gestaltet werden.

Eine Ausklinkung oder Ausnehmung mit begrenzter Länge stellt durch einen verbleibenden Verbindungssteg einen zusammenhängenden Blechkörper sicher. Die Breite kann frei bestimmt werden.

Bei kombinierter Anwendung von verschiedenen Blechen mit verschiedenen auch in ihrer Geometrie unterschiedlichen Ausklinkungen oder Ausnehmungen innen und außen ergeben sich vielzählige Kombinationsmöglichkeiten.

Die zulässigen designtechnischen Freiheitsgrade bei der Gestaltung des Blechschnittes sind in erster Linie von den elektromagnetischen und physikalischen Anforderungen an das Stator- oder Rotorpaket beziehungsweise dem Elektromotor und auch der Gesamtbaugruppe abhängig.

Besonders vorteilhaft ist, dass durch einen erfindungsgemäßen individuellen Paketaufbau die Möglichkeiten für den Spritzgießprozess erweitert werden können.

Das Umspritzen des Stator- oder Rotorpaketes im Spritzgießverfahren folgt bestimmten physikalischen Gesetzmäßigkeiten. Einer der wesentlichen Einfussfaktoren auf das Füllverhalten im Spritzgießprozess ist der Wandstärkenverlauf im Design des einzuspritzenden Kunststoffes. Das bedeutet, bei Wandstärkenbereichen mit größerem Kunststoffquerschnitt eilt der Schmelzestrom des Kunststoffes während des Einspritzvorgangs schneller vor, als bei Konturbereichen mit geringem Querschnitt. Ein weiterer wichtiger Einflussfaktor sind die Positionen der Anspritzpunkte.

Die bereits erwähnte Flexibilität im Aufbau des Paketes durch verschiedene Blechschnittvarianten ermöglicht das Füllverhalten so zu beeinflussen, dass ein bestmögliches Ergebnis erreicht werden kann.

Beispiele / Einflussfaktoren Blechschnittvariante
- Blechschnittkontur Wickelnut allgemein - Wandstärkenänderung für den Kunststoff
- Fließkanal - Wandstärkenänderung für den Kunststoff
- Fließkanal - verlängerter Fließweg
- Anspritzkanal - verlängerter Fließweg
- Position Anspritzkanal - Einfluss auf das Füllverhalten

Besonders vorteilhaft ist, dass bei nicht zufriedenstellenden Ergebnissen im Füllverhalten im Rahmen der designtechnischen Freiheitsgrade zum Beispiel Wandstärken oder die Anzahl und Position der Angusspunkte erfindungsgemäß fexibel geändert und neu kombiniert werden kann. Jeder neue Kombinationsaufbau des Blechstapels beziehnungsweise des Kunststoffdesigns muss im Füllverhalten separat bewertet werden.

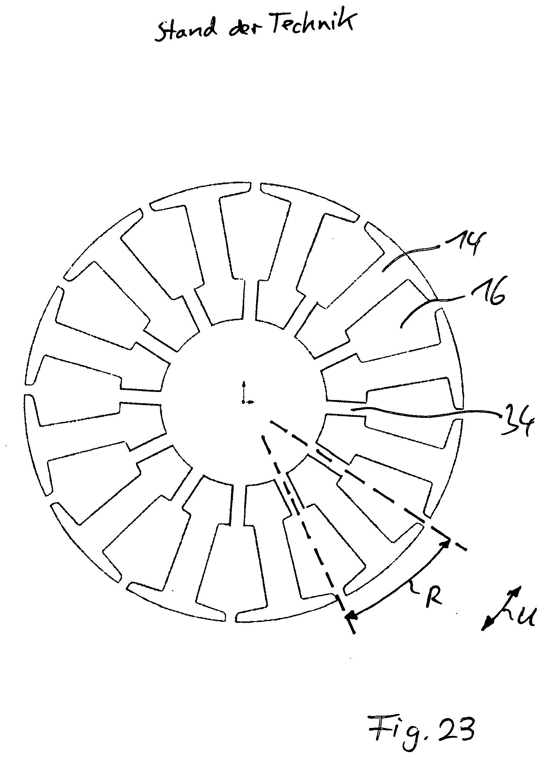

Die Anwendung des Anspritzkanals kann erfordern, dass bei vielnutigen Stator-oder Rotorpaketen jede Wickelnut mit einem Anspritzkanal verbunden und angespritzt wird. Beim Paketaufbau aus losen Einzelblechen würde durch die Stanzung der durchgehenden Ausnehmungen für den Anspritzkanal jedes Blech in Einzelsegmente zerfallen (siehe Fig. 23).

Das hätte zur Folge, dass diese Einzelsegmente im Stapelprozess nicht mehr gehändelt werden kann aber auch im Spritzgießprozess durch den Einfluss von Spritzdruck nicht mehr zuverlässig auf der genauen Position im Blechstapelverbund gehalten werden kann. Diese Problematik besteht unabhängig davon ob der Anspritzkanal bei innengenuteten oder außengenuteten Statoren / Rotoren Anwendung findet.

Mit dem Ziel Anspritzkanäle für jedes Polelement zu erzeugen und gleichzeitig Einzelsegmente zu vermeiden, kommen die oben dargestellten erfindungsgemäßen Systematiken zum Einsatz. Dabei kann eine Vielzahl von Ausführungsbeispielen an Blechschnittmustern und deren Kombinationsmöglichkeiten zum Einsatz kommen, die jeweils von der vorhandenen Geometrie, der Anzahl der Winkelnute und dergleichen abhängen.

Der wesentliche Grundgedanke der Erfindung beziehungsweise die Lösung des Problems beruht darauf, dass die einzelnen Polelemente eines Einzelbleches bezüglich der Teilblechpakete mit Ausnehmungen nicht komplett durchdrängt werden, sondern zumindest in Teilbereichen eines Blechschnittes als einteiligen (zusammenhängenden) Blechkörper zu belassen und trotzdem die Möglichkeit zu schaffen, zumindest ein oder mehrere Anspritzkanäle gegebenenfalls sogar in mehreren Anspritzebenen durch entsprechende Stapelungen der jeweiligen Einzelbleche zu erzeugen.

Eine besonders bevorzugte Ausgestaltung, die optimale konstruktive geometrische Verhältnisse bezüglich des Fließweges des anzuspritzenden Kunststoff gewährleistet zeichnet sich dadurch aus, dass das erste und zweite Rasterwinkelmaß und das Differenzrasterwinkelmaß dem einfachen, zweifachen oder mehrfachen des Rasterwinkelmaßes der Wickelnut entspricht.

Eine besonders vorteilhafte erste bevorzugte Ausgestaltung bezüglich der Ausführungsvariante mit ersten und zweiten Einzelblechen, zeichnet sich dadurch aus, dass die ersten Einzelbleche in dem Nutgrund zumindest eine nach außen/innen offene Fließkanalausnehmung aufweisen, die zweiten Einzelbleche in den Nutgründen, die keine erste Ausnehmung aufweisen, ebenfalls eine Fließkanalausnehmung aufweisen, so dass sich bei aufeinander gestapelten ersten und zweiten Einzelblechen ein in Längsrichtung verlaufender durchgehender Fließkanal ergibt, der mit dem Anspritzkanal in Kommunikationsverbindung steht.

Eine besonders bevorzugte zweite Ausführungsvariante mit ersten Einzelblechen, dritten und vierten Einzelblechen, zeichnet sich dadurch aus, dass die ersten Einzelbleche in dem Nutgrund zumindest eine nach außen/innen offene Fließkanalausnehmung aufweisen, die vierten Einzelbleche in dem Nutgrund zumindest eine nach außen/ innen offene Fließkanalausnehmung aufweisen, so dass sich bei aufeinander gestapelten ersten, dritten und vierten Einzelblechen ein in Längsrichtung durchgehender Fließkanal im Nutgrund ergibt, der mit dem Anspritzkanal in Kommunikationsverbindung steht.

Der Kunststoff wird wie bereits ausführlich beschrieben über den Anspritzkanal in die jeweiligen Wickelnutbereiche des Stators/ Rotors eingeleitet. Während des Einspritzens fließt die Schmelze über eine relativ dünne Wandstärke der Nutisolationen in beide Füllrichtungen und formt zum Ende des Einspritzvorgangs die beiden stirnseitigen Kunststoffkonturen aus.

Nachteilig dabei ist, dass dünnwandige Konturbereiche sehr schnell erstarren.

Der Schmelzestrom verteilt sich nach dem Eintritt in den Isolationsbereich der Wickelnut in zwei Richtungen. Der Vorteil einer verlängerten Fließweglänge ist hierbei zwar gegeben, der Nachdruck zu den stirnseitigen Konturbereichen bricht aber sehr schnell ab. Grund dafür ist die schnell erstarrende Schmelze aufgrund der geringen Wandstärke in den Wickelnuten. Die Folge ist eine unkontrollierte Schwindung und erhöhter Verzug in dickwandigen Konturbereichen.

Wie aus der Spritzgießtechnik für Thermoplaste bekannt ist, ist es deshalb vorteilhaft Kunststoffteile möglichst an dickwandigen Konturbereichen anzuspritzen um dem/der für diese Wandstärke erforderlichen Nachdruck/längeren Nachdruckzeit gerecht zu werden.

Um die Problematik in dem dargestellten Feld zu beseitigen, zeichnet sich eine besonders vorteilhafte Ausgestaltung der erfindungsgemäßen Stator-/Rotorvorrichtung dadurch aus, dass die ersten Einzelbleche in einem einfachen oder mehrfachen Rasterwinkelmaß in Umfangsrichtung in dem Verbindungssteg zwischen den Vorsprungeinheiten geschlossene Ausnehmungen aufweisen, die bei aufeinander gestapelten ersten, dritten und vierten Einzelblechen ein in Längsrichtung durchgehend verlaufenden Durchspritzfließkanal bilden, der mit den durch die ersten und zweiten Ausnehmungen der aufeinander gestapelten dritten und vierten Einzelbleche gebildeten in radialer Richtung verlaufenden Anspritzkanal in Längsrichtung in Kommunikationsverbindung steht.

In Verbindung mit dem Anspritzkanal haben die Bohrungen/geschlossenen Ausnehmungen eine weitere ganz besondere Aufgabe, die nachfolgend beschrieben wird.

Im Paketaufbau können solche Bohrungen/Ausnehmungen als "Durchspritzkanal" verwendet werden, wenn sie in geeigneter Anzahl, Position und Größe vorhanden sind. Sie sind direkt mit dem/den Anspritzkanal/-kanälen verbunden. Grundsätzlich ist nicht zwingend erforderlich dass die Kontur dieser Ausnehmungen rund ist.

Jede geometrische Form die bei gestapelten Einzelblechen einen durchgehenden Kanal mit entsprechendem Querschnitt bildet ist möglich. Im zu umspritzenden Paket bzw. Blechstapel bilden diese Ausnehmungen der Einzelbleche einen durchgehenden Kanal von der einen zur anderen Paketstirnseite.

Eine besonders vorteilhafte und wesentliche Besonderheit der vorliegenden Erfindung beruht darauf, dass die Anspritzkanäle mit den Durchspritzkanälen verbunden sind und ein durchgehendes Angusskanalsystem darstellen. Die Durchspritzkanäle dienen dazu, in dickwandigen Konturbereichen, die üblicherweise in den Stirnendbereichen der Einrichtung vorhanden sind, den Nachdruck bei dem Kunststoffspritzvorgang lange genug sicher zu stellen. Damit wird erreicht, indem die Kanalquerschnitte der geschlossenen Ausnehmung entsprechend groß ausgelegt werden, dass der Nachdruck in den dickwandigen zu umspritzenden Kunststoffbereichen länger wirken kann.

Während des Spritzgießvorgangs werden die Bohrungen beziehungsweise geschlossenen Ausnehmungen, die übereinander gestapelt den Durchspritzkanal bilden, über den Anspritzkanal mit Kunststoff ausgefüllt und stellen eine schlüssige Verbindung zwischen den beiden stirnseitig angespritzen Kunststoffkonturen her. Diese Funktion stellt eine Art "Nietverbindung" her, die sich als sehr vorteilhaft erweist.

Bei zum Beispiel stanzpaketierten, geklebten oder in sonstigem Verfahren starr gefügten Paketen ist diese Durchspritzbohrung nicht mit einer solch hohen Wichtigkeit zu sehen, da das Paket bereits durch das vorausgehende Fügeverfahren eine gewisse Eigenfestigkeit oder Steifigkeit aufweist.

Bei der Umspritzung von Einzelblechstapeln würde der umspritzte Blechstapel ohne diese Durchspritzbohrungen nur durch die dünne Kunststoffisolation der Wickelnuten zusammengehalten werden. Hier sind diese Durchspritzbohrungen als nützliches Element zur Erhöhung der Festigkeit und Steifigkeit des umspritzten Pakets zu sehen.

Der erstarrte Kunststoff in diesen Bohrungen/Ausnehmungen mit entsprechendem Querschnitt, kann eventuelle axiale Zugkräfte aber auch Torsionskräfte aufnehmen und gibt zusätzliche Sicherheit dass der umspritzte Blechstapel bei Belastung nicht deformiert wird. Bei fehlenden Durchspritzkanälen müssen diese Kräfte dann oft von der relativ dünnwandigen Wicklenutisolation aufgenommen werden, wenn keine weiteren angespritzten stabilisierende Kunststoffkonturen mehr vorhanden sind.

Eine besonders bevorzugte Ausgestaltung zeichnet sich dadurch aus, dass die ersten und zweiten Ausnehmungen zur Bildung der Anspritzkanäle im aufeinander gestapelten Zustand der zweiten, dritten und vierten Einzelbleche in einer Draufsicht gesehen eine U-förmige oder trapezförmige Umfangsstruktur mit der Tiefe und einer gewählten Öffnungsbreite aufweisen. Eine derartige Ausgestaltung ist bezüglich der Ausnehmungen besonders wirtschaftlich herstellbar. Es sind jedoch auch anders geartete Umfangsstrukturen der Ausnehmungen möglich.

Um das Fließverhalten zu optimieren, zeichnet sich eine besonders vorteilhafte Ausgestaltung dadurch aus, dass die Anzahl der aufeinander gestapelten zweiten, dritten beziehungsweise vierten Einzelbleche so gewählt ist, dass die von der Anzahl der übereinander gestapelten Einzelbleche bestimmten Höhe des gebildeten Anspritzkanals im Wesentlichen seiner Öffnungsbreite entspricht. Damit ergibt sich ein im Wesentlichen quadratischer Querschnitt. Es sind jedoch auch andere Querschnitte ausbildbar.

Die Winkelnute können als in Längsrichtung gerade oder schräg verlaufende Nute ausgebildet sein.

Die Anordnung der Anspritzkanäle ist von dem jeweiligen Einsatzfall bestimmt. Durch die erfindungsgemäße Ausgestaltung können die Anspritzkanäle in beliebiger Position in Längsrichtung der Stator-/ Rotorpaketeinrichtung angeordnet werden, beispielsweise im oberen und/oder unteren Stirnrandbereich und/oder im mittleren Bereich.

Die Fließkanalausnehmung weist bevorzugt eine konkave Umfangskontur auf, die vorteilhaft polygonartig oder teilkreisförmig ausgebildet ist. Es sind jedoch auch andere querschnittsvergrößernde Umfangskonturen ausbildbar.

Eine besonders vorteilhafte Ausgestaltung die, besonders gute Fließeigenschaften während des Spritzvorgangs gewährleisten, zeichnet sich dadurch aus, dass an mehreren oder allen Wickelnuten zumindest ein Fließkanal vorhanden ist.

In der Praxis hat es sich als besonders vorteilhaft herausgestellt bezüglich einer zuverlässigen Herstellung der Kunststoffbeschichtung, dass die maximale Tiefe der Fließkanalausnehmung ein ein- oder mehrfaches der Dicke der Kunststoffschicht beträgt.

Die geschlossene Ausnehmung kann beliebige Umfangskonturen aufweisen, insbesondere eine kreisförmige Umfangskontur.

Eine besonders vorteilhafte Ausgestaltung, die zuverlässig auch eine Kunststoffversorgung in den oberen und unteren Randbereichen der Stator-/Rotorpakteinrichtung unter Aufrechterhaltung des Druckes gewährleistet, zeichnet sich dadurch aus, dass die geschlossene Ausnehmung in Umfangsrichtung in einem ein- oder mehrfachen Rasterwinkelmaß der Winkelnut beabstandet angeordnet sind.

Je nach den konstruktiven Gegebenheiten und bezüglich der Kunststoffdicke der Kunststoffschicht erforderlichen Vorgaben zeichnet sich eine besonders vorteilhafte Ausgestaltung dadurch aus, dass mehrere erste und zweite Teilblechpakete übereinander gestapelt vorhanden sind.

Üblicherweise besteht die Kunststoffschicht aus thermoplastischem oder duroplastischem Kunststoff.

Die obigen Ausführungen beziehen sich auf eine Stator-/Rotorpaketeinrichtung, die sowohl als Innen- oder auch als Außenpolläufer ausgebildet sein kann.

Ein erstes erfindungsgemäßes Ausführungsbeispiel eines Verfahrens zur Herstellung einer Kunststoffbeschichtung einer Stator-/Rotorvorrichtung weist folgende Merkmale auf: zumindest einer oder mehreren übereinander gestapelten Stator-/Rotorpaketeinrichtung/en, wobei die Stator-/Rotorpaketeinrichtungen jeweils als zu einer Drehachse rotationssymmetrisch ausgebildetes Bauteil ausgebildet ist/sind, mit einer zentralen Innenausnehmung und mit jeweils übereinander gestapelt angeordneten ersten Einzelblechen, die ersten Einzelbleche eine rotationssymmetrische Umfangskontur mit in Umfangsrichtung in einem vorgegebenen Rasterwinkelmaß beabstandet angeordnete Vorsprungeinrichtungen aufweisen, die im übereinander gestapelten Zustand nach innen oder außen weisende Polschuhe bilden, die von einem elektrisch leitenden Stromleiter jeweils umwickelt sind und jeweils zwischen den Polschuhen in dem vorgegebenen Rasterwinkelmaß Wickelnute vorhanden sind, zumindest die Innenumfangskontur jeder Wickelnut und die Ober-, Unterseite der Polschuhe eine elektrisch isolierende gespritzte Kunststoffschicht aufweist, wobei die Stator-/ Rotorpaketeinrichtung zumindest ein erstes Teilblechpaket mit mehreren übereinander angeordneten Einzelblechen aufweist, die in dem nach außen/innen weisenden Innenbereich des Nutgrundes der Wickelnut zumindest eine erste nach außen/innen offene Ausnehmung mit einer ersten Tiefe in Radialrichtung aufweist, wobei die ersten Ausnehmungen jedes Einzelbleches des ersten Teilblechpaketes kongruent übereinander angeordnet sind, ein ober- oder unterseitig des ersten Teilblechpaketes angeordnetes zweites Teilblechpaket mit mehreren übereinander angeordneten Einzelblechen aufweist, die in dem dem Nutgrund der Wickelnut gegenüber liegenden Bereich, das heißt zur Innenausnehmung hin oder nach außen hin, zumindest eine weitere nach innen/außen offene Ausnehmung mit einer zweiten Tiefe in Radialrichtung aufweist, wobei die zweiten Ausnehmungen jedes Einzelblechs des zweiten Teilblechpaketes kongruent übereinander angeordnet sind, wobei das erste und zweite Teilblechpaket so zueinander angeordnet sind, dass sich die ersten und zweiten Ausnehmungen an derselben Umfangswinkelposition angeordnet sind und die Tiefe und der ersten und zweiten Ausnehmungen so groß sind, dass sich die ersten und zweiten Ausnehmungen in einer Draufsicht gesehen bereichsweise überlappen, so dass ein von innen nach außen oder von außen nach innen durchgehender stufenförmiger Anspritzkanal für die Kunststoffschicht gebildet wird, ober- oder unterhalb des ersten und/oder zweiten Teilblechpakets erste Einzelbleche ohne erste und zweite Ausnehmungen angeordnet sind und ist dadurch gekennzeichnet, dass nach Einbringung der Einzelbleche oder Einzelblechpakete in ein Spritzgießwerkzeug der Kunststoff über die stufenförmigen Anspritzkanäle eingespritzt wird.

Ein zweites erfindungsgemäßes Ausführungsbeispiel eines Verfahrens zur Herstellung einer Kunststoffbeschichtung einer Stator-/ Rotorvorrichtung weist folgende Merkmale auf: zumindest einer oder mehreren übereinander gestapelten Stator-/Rotorpaketeinrichtung/en, wobei die Stator-/Rotorpaketeinrichtungen jeweils als zu einer Drehachse rotationssymmetrisch ausgebildetes Bauteil ausgebildet ist/ sind, mit einer zentralen Innenausnehmung und mit jeweils übereinander gestapelt angeordneten ersten Einzelblechen, die ersten Einzelbleche eine rotationssymmetrische Umfangskontur mit in Umfangsrichtung in einem vorgegebenen Rasterwinkelmaß beabstandet angeordnete Vorsprungeinrichtungen aufweisen, die im übereinander gestapelten Zustand nach innen oder außen weisende Polschuhe bilden, die von einem elektrisch leitenden Stromleiter jeweils umwickelt sind und jeweils zwischen den Polschuhen in dem vorgegebenen Rasterwinkelmaß Wickelnute vorhanden sind, zumindest die Innenumfangskontur jeder Wickelnut und die Ober-, Unterseite der Polschuhe eine elektrisch isolierende gespritzte Kunststoffschicht aufweist, wobei die Stator-/Rotorpaketeinrichtung zumindest ein erstes Teilblechpaket mit mehreren übereinander angeordneten Einzelblechen aufweist, die in dem nach außen/innen weisenden Innenbereich des Nutgrundes der Wickelnut zumindest eine erste nach außen/innen offene Ausnehmung mit einer ersten Tiefe in Radialrichtung aufweist, wobei die ersten Ausnehmungen jedes Einzelbleches des ersten Teilblechpaketes kongruent übereinander angeordnet sind, ein ober- oder unterseitig des ersten Teilblechpaketes angeordnetes zweites Teilblechpaket mit mehreren übereinander angeordneten Einzelblechen aufweist, die in dem dem Nutgrund der Wickelnut gegenüber liegenden Bereich, das heißt zur Innenausnehmung hin oder nach außen hin, zumindest eine weitere nach innen/außen offene Ausnehmung mit einer zweiten Tiefe in Radialrichtung aufweist, wobei die zweiten Ausnehmungen jedes Einzelblechs des zweiten Teilblechpaketes kongruent übereinander angeordnet sind, wobei das erste und zweite Teilblechpaket so zueinander angeordnet sind, dass sich die ersten und zweiten Ausnehmungen an derselben Umfangs-winkelposition angeordnet sind und die Tiefe und der ersten und zweiten Ausnehmungen so groß sind, dass sich die ersten und zweiten Ausnehmungen in einer Draufsicht gesehen bereichsweise überlappen, so dass ein von innen nach außen oder von außen nach innen durchgehender stufenförmiger Anspritzkanal für die Kunststoffschicht gebildet wird, ober- oder unterhalb des ersten und/oder zweiten Teilblechpakets erste Einzelbleche ohne erste und zweite Ausnehmungen angeordnet sind, die ersten Einzelbleche in dem Nutgrund zumindest eine nach außen/ innen offene Fließkanalausnehmung aufweisen, die zweiten Einzelbleche in den Nutgründen, die keine erste Ausnehmung aufweisen, ebenfalls eine Fließkanalausnehmung aufweisen, so dass sich bei aufeinander gestapelten ersten und zweiten Einzelblechen ein in Längsrichtung verlaufender durchgehender Fließkanal ergibt, der mit dem Anspritzkanal in Kommunikationsverbindung steht und ist dadurch gekennzeichnet, dass nach Einbringung der Einzelbleche oder Einzelblechpakete in ein Spritzgießwerkzeug der Kunststoff über die stufenförmigen Anspritzkanäle und die an die stufenförmigen Anspritzkanäle anschließenden durchgehenden Fließkanäle eingespritzt wird.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:

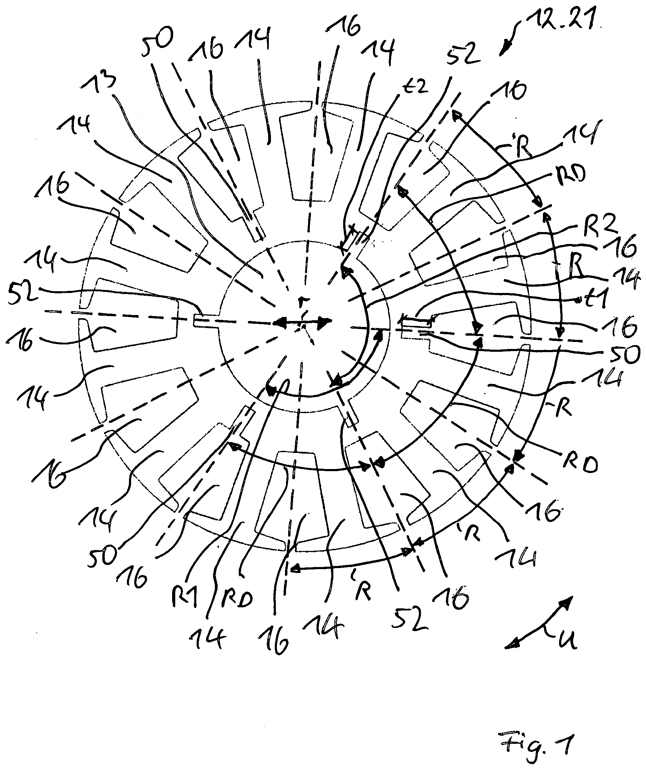

- Fig. 1: schematische Draufsicht auf ein erstes Ausführungsbeispiel eines zweiten Einzelbleches für eine außengenutete Stator-/ Rotorpaketeinrichtung mit in Umfangsrichtung in einem Rasterwinkelmaß angeordneten Winkelnute mit in Umfangsrichtung alternierend in einem doppelten Rasterwinkelmaß angeordneten ersten und zweiten Ausnehmungen zur Ausbildung eines durchgehenden Anspritzkanals, der ein erstes und zweites Teilblechpaket mit jeweils kongruent übereinander gestapelten zweiten Einzelblechen aufweist, wobei das erste Teilblechpaket gegenüber dem zweiten Teilblechpaket um das doppelte Rasterwinkelmaß versetzt angeordnet ist,
- Fig. 2: schematische Detaildraufsicht auf eine Wickelnut mit einer nach innen offenen zweiten Ausnehmung,
- Fig. 3: schematische Detaildraufsicht auf eine Winkelnut mit einer nach außen offenen ersten Ausnehmung,
- Fig. 4: schematischer Längsschnitt durch eine Stator-/Rotorpaketeinrichtung in umspritzten Zustand, gebildet aus ersten und zweiten Teilblechpaketen und darunter und darüber angeordneten gestapelten ersten Einzelblechen in einer ersten Anordnung der Teilblechpakete zueinander,
- Fig. 5: schematische Detailperspektivansicht einer aufgeschnittenen Stator-/Rotorpaketeinrichtung mit insgesamt 4 versetzt angeordneten ersten und zweiten Teilblechpaketen zur Bildung von Anspritzkanälen für jede Winkelnut,
- Fig. 6: schematische Perspektivdetaildarstellung des Details A in Fig. 5,
- Fig. 7: schematischer Längsschnitt durch eine Stator-/Rotorpaketeinrichtung in umspritzten Zustand, gebildet aus ersten und zweiten Teilblechpaketen und darunter und darüber angeordneten gestapelten ersten Einzelblechen in einer zweiten Anordnung der ersten und zweiten Teilblechpakete zueinander,
- Fig. 8: schematische Perspektivdarstellung der mit Kunststoff umspritzenden Stator-/Rotorpaketeinrichtung gemäß Fig. 7,
- Fig. 9: schematische Draufsicht auf ein zweites Ausführungsbeispiel eines zweiten Einzelbleches ähnlich wie das in Fig. 1, jedoch mit in Umfangsrichtung alternierend mit einem einfachen Rasterwinkelmaß versetzt, jeweils innen und außen angeordneten ersten und zweiten Ausnehmungen,
- Fig. 10: schematische Perspektivdarstellung von insgesamt vier aufeinander gestapelten ersten und zweiten Teilblechpaketen, jeweils gebildet aus zweiten Einzelblechen gemäß Fig. 9, wobei die Teilbleche und das Rasterwinkelmaß in Umfangsrichtung versetzt angeordnet sind,
- Fig. 11: schematische Detailperspektive auf das Detail B von Fig. 10,
- Fig. 12: schematischer Längsschnitt durch eine mit Kunststoff umspritzte Stator-/Rotorpaketeinrichtung mit den Teilblechpaketen von Fig. 10 und oberhalb und unterhalb gestapelten ersten Einzelblechen,
- Fig. 13: schematische Draufsicht auf ein erstes Ausführungsbeispiel eines dritten Einzelbleches mit einer ersten nach außen offenen Ausnehmung im Nutgrund jeder Wickelnut,
- Fig. 14: schematische Draufsicht auf ein erstes Ausführungsbeispiel eines vierten Einzelbleches mit auf Höhe jeder Wickelnut angeordneten zweiten nach innen offenen Ausnehmung,
- Fig. 15: schematische Perspektivdarstellung eines Stator-/Rotorblechpakets mit übereinander gestapelten ersten und zweiten Teilblechpaketen aus dritten und vierten Einzelblechen zur Bildung von Anspritzkanälen für jede Wickelnut und oberseitig und unterseitig gestapelten ersten Einzelblechen,
- Fig. 16: schematischer Längsschnitt durch eine mit Kunststoff umspritzte Stator-/Rotorpaketeinrichtung, die im Bereich der Anspritzkanäle eine Struktur gemäß Fig. 15 aufweist,
- Fig. 17: schematische Perspektivdarstellung einer mit Kunststoff umspritzten Stator-/Rotorpaketeinrichtung gemäß Fig. 16,
- Fig. 18: schematische Draufsicht auf ein drittes Einzelblech, bei dem in dem Nutgrund jeder zweiten Nut eine erste nach außen offene Ausnehmung vorhanden ist und in den übrigen Nutgründen jeweils eine nach außen offene Fließkanalausnehmung vorhanden ist, wobei zwischen den ersten Ausnehmungen in Umfangsrichtung jeweils eine geschlossene Ausnehmung vorhanden ist,
- Fig. 19: schematische Draufsicht auf ein viertes Einzelblech, bei dem in dem Nutgrund jeder zweiten Nut eine zweite nach innen offene Ausnehmung vorhanden ist und in den übrigen Nutgründen jeweils eine nach außen offene Fließkanalausnehmung vorhanden ist, wobei zwischen den zweiten Ausnehmungen in Umfangsrichtung jeweils eine geschlossene Ausnehmung vorhanden ist,
- Fig. 20: Draufsicht auf ein erstes Einzelblech, das im Nutgrund jeder Wickelnut eine nach außen offene Fließkanalausnehmung aufweist und im Verbindungssteg auf Höhe der Fließkanalausnehmung jeweils eine geschlossene Ausnehmung aufweist,
- Fig. 21: schematischer Längsschnitt durch eine mit Kunststoff umspritzte Stator-/Rotorpaketeinrichtung gemäß Fig. 16 unter Darstellung der Fließwege des eingespritzten Kunststoffkanals über die Anspritzkanäle zur Ausbildung der Kunststoffumspritzung,
- Fig. 22: schematischer Längsschnitt durch die Stator-/Rotorpaketeinrichtung gemäß Fig. 7 unter Darstellung der Fließwege des eingespritzten Kunststoffs zur Ausbildung der Kunststoffumspritzung der Wickelnute und der Umspritzung des oberen und unteren Randbereichs über einen Durchspritzfließkanal,
- Fig. 23: schematische Darstellung eines Einzelbleches des Standes der Technik für den Fall, dass für jede Wickelnut eine durchgehende Spritzkanalausnehmung vorhanden ist,
- Fig. 24: schematische Perspektivdarstellung einer Stator-/Rotorpaketeinrichtung gemäß dem Stand der Technik mit nach innen offenen Wickelnute gebildet aus übereinander gestapelten Einzelblechen,
- Fig. 25: schematische Detaildraufsicht auf eine Wickelnut nach Fig. 24, deren Innenoberfläche von einer Kunststoffschicht umspritzt ist,
- Fig. 26: schematische Detailperspektivdarstellung der Fließrichtung des im oberen Anspritzpunkts eingespritzten Kunststoffs um die Oberfläche der Wickelnute gemäß dem Stand der Technik,
- Fig. 27: schematische Draufsicht auf ein erstes Ausführungsbeispiel eines sechsten Einzelbleches für eine innengenutete Stator-/ Rotorpaketeinrichtung mit in Umfangsrichtung in einem Rasterwinkelmaß angeordneten Wickelnute mit in jeder Wickelnut angerordneten nach innen offenen zweiten Ausnehmungen,
- Fig. 28: schematische Draufsicht auf ein erstes Ausführungsbeispiel eines fünften Einzelbleches für eine innengenutete Stator-/ Rotorpaketeinrichtung mit in Umfangsrichtung in einem Rasterwinkelmaß angeordneten Wickelnuten mit in dem dem Nutgrund jeder Wickelnut gegenüberliegenden Außenbereich nach außen offenen ersten Ausnehmungen,
- Fig. 29: schematische Draufsicht auf ein zweites Ausführungsbeispiel eines ersten Einzelbleches mit prinzipieller Querschnittskontur wie die Einzelbleche gemäß Fig. 27 und 28, jedoch ohne erste und zweite Ausnehmung,
- Fig. 30: schematische Perspektivdarstellung einer Stator-/Rotorpaketeinrichtung mit Ausbildung eines Anspritzkanals durch übereinander angeordnete Teilblechpaketen aus fünften und sechsten Einzelblechen und darüber und darunter angeordneten ersten Einzelblechen im mit Kunststoff umspritzten Zustand,
- Fig. 31: schematische Detailausschnittsperspektivansicht eines durch die übereinander gestapelten fünften und sechsten Einzelbleche gebildeten Fließkanals mit ober- und unterhalb angeordneten Einzelblechen,
- Fig. 32: schematische Detailperspektivdarstellung der Stator-/ Rotorpaketeinrichtung gemäß Fig. 30 ohne Darstellung der Kunststoffumspritzung,
- Fig. 33: schematische Perspektivdarstellung im Detail der Stator-/ Rotorpaketeinrichtung gemäß Fig. 32 ohne oberseitig und unterseitig angeordnete erste Einzelbleche und
- Fig. 34: schematische Detailperspektivansicht der durch die fünften und sechsten Einzelbleche gemäß Fig. 27 und 28 gebildeten Teilblechpakete zur Ausbildung des Anspritzkanals.

### WEGE ZUM AUSFÜHREN DER ERFINDUNG

In Fig. 1 ist eine Draufsicht auf ein erstes Ausführungsbeispiel eines zweites Einzelbleches 12.21 dargestellt, das im Rahmen einer Stator-/ Rotorpaketeinrichtung eingesetzt ist, die außengenutet ist und von innen her beim Spritzvorgang mit Kunststoff beaufschlagt wird. Das zweite Einzelblech 12.21 ist als rotationssymmetrisches Bauteil ausgebildet. Die Radialrichtung ist mit dem Pfeil r dargestellt. Die Umfangsrichtung ist mit dem Pfeil U dargestellt. Das zweite Einzelblech 12.21 weist eine zentrale Innenausnehmung 13 auf, in die bei der Herstellung der Kunststoffschicht die entsprechenden Düseneinheiten einer Kunststoffumspritzungsvorrichtung eingebracht und angesetzt werden.

Die zweiten Einzelbleche 12.21 weisen mehrere in Umfangsrichtung U in einem Rasterwinkelmaß R versetzt angeordnete Winkelnute 16 auf, wobei zwischen den Winkelnuten 16 jeweils Polschuhe 14 vorhanden sind und die Polschuhe 14 im Laufe des Herstellprozesses der Stator-/ Rotorpaketeinrichtung mit einer elektrisch leitenden Einheit umgeben werden, nachdem zuvor eine elektrisch isolierende Kunststoffschicht aufgebracht ist.

Im dargestellten Ausführungsbeispiel weist das zweite Einzelblech 12.21 zwölf Winkelnute 16 beziehungsweise Polschuhe 14 auf. Es können jedoch auch zweite Einzelbleche verwendet werden, die eine größere oder kleinere Anzahl an Wickelnuten 16 beziehungsweise Polschuhen 14 aufweisen. Entsprechend verändert sich das Rasterwinkelmaß R.

Das zweite Einzelblech 12.21 weist in dem Nutgrund der Wickelnut 16 jeweils eine erste nach außen offene Ausnehmung 50 auf, die als Sacklochausnehmung ausgebildet ist und umfangsmäßig in einem Rasterwinkelmaß R1 angeordnet ist, das dem vierfachen des Rasterwinkelmaßes R der Winkelnute 16 entspricht, das heißt dass in jeder vierten Wickelnut 16 eine erste Ausnehmung 50 vorhanden ist. Alternierend sind an dem zweiten Einzelblech 12.21 zweite Ausnehmungen 52 angeordnet, die gegenüber dem jeweiligen Nutgrund vorhanden und nach innen sacklochartig offen ausgebildet sind. Diese zweiten Ausnehmungen 52 sind ebenfalls in einem Rasterwinkelmaß R2 angeordnet, das dem vierfachen des Rasterwinkelmaß R der Wickelnute 16 entspricht. So ist im Nutgrund jeder vierten Wickelnut 16 in Umfangsrichtung U jeweils eine erste Ausnehmung 50 vorhanden und in Umfangsrichtung U versetzt um das Differenzrasterwinkelmaß RD, das dem zweifachen des Rasterwinkelmaßes R der Wickelnut 16 entspricht, nach innen weisende zur Innenausnehmung 13 offene zweite Ausnehmungen 52 vorhanden.

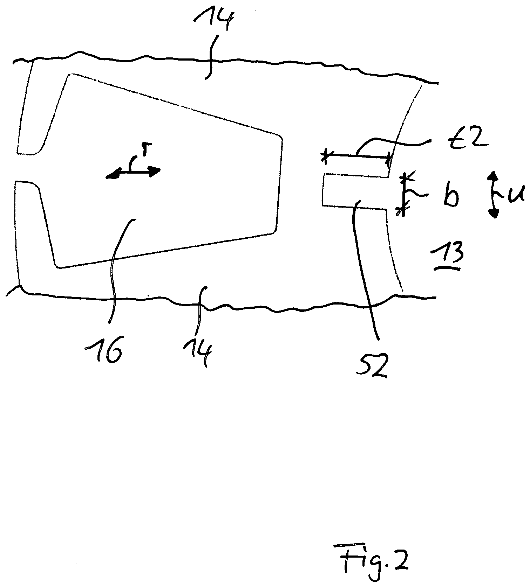

In Fig. 2 ist im Detail die zweite Ausnehmung 52 dargestellt. Diese weist in Umfangsrichtung U eine Öffnungsbreite b auf und in Radialrichtung r eine Tiefe t2.

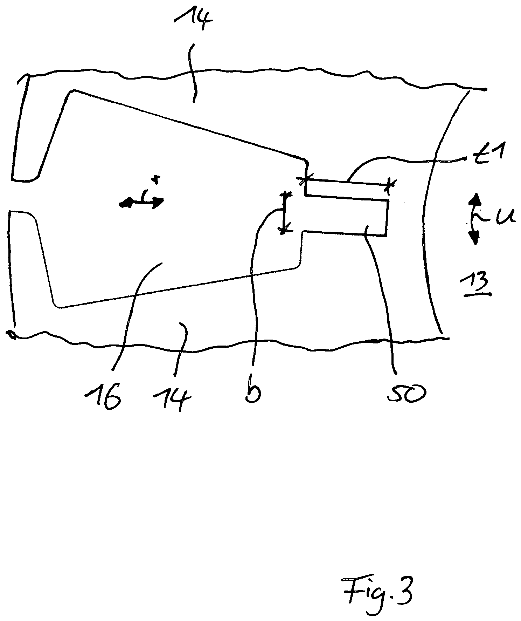

In Fig. 3 ist eine erste Ausnehmung 50 im Detail dargestellt. Diese weist eine Tiefe t1 in radialer Richtung r und eine Öffnungsbreite b in Umfangsrichtung U auf.

Die Tiefe t1 und t2 der ersten Ausnehmung 50 und der zweiten Ausnehmung 52 sind dabei so gewählt, dass beim Übereinanderstapeln zweiter Einzelbleche 12.21 mit kongruent übereinander angeordneten ersten und zweiten Ausnehmungen 50, 52, was durch entsprechende Rotationen der zweiten Einzelbleche 12.21 um das Differenzrasterwinkelmaß RD umgesetzt wird, eine durchgehende Verbindung von der Innenausnehmung 13 zum Nutgrund der Wickelnut 16 gebildet wird, was letztendlich zur Ausbildung eines durchgehenden Anspritzkanals 28 führt.

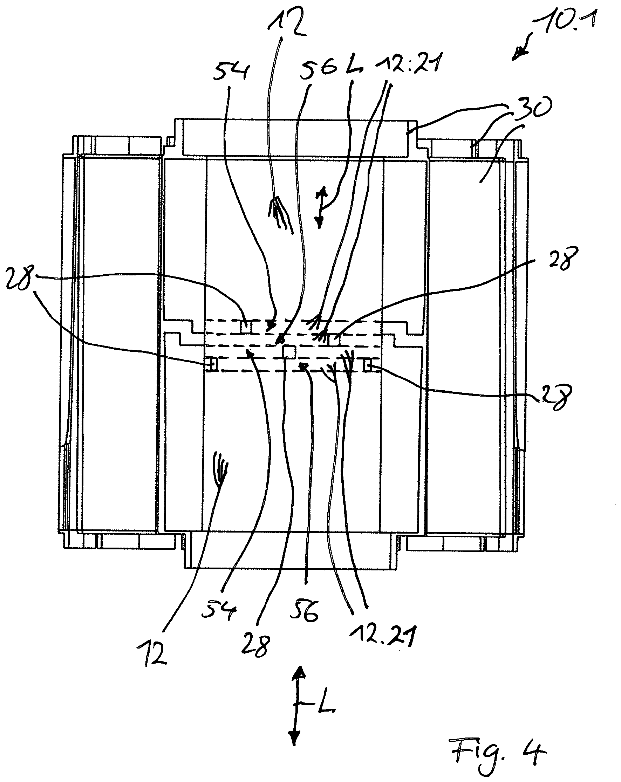

Durch derartige Anspritzkanäle 28 eröffnet sich die Möglichkeit, an nahezu jeder beliebigen Position in Längsrichtung L einer Stator-/ Rotorpaketeinrichtung 10.1 (siehe Fig. 4) Anspritzpunkte vorzusehen, damit von der Innenausnehmung 13 Kunststoffmaterial zur Umspritzung der Innenoberfläche der Wickelnute und Umspritzung der oberen und unteren Bereiche eingebracht werden kann.

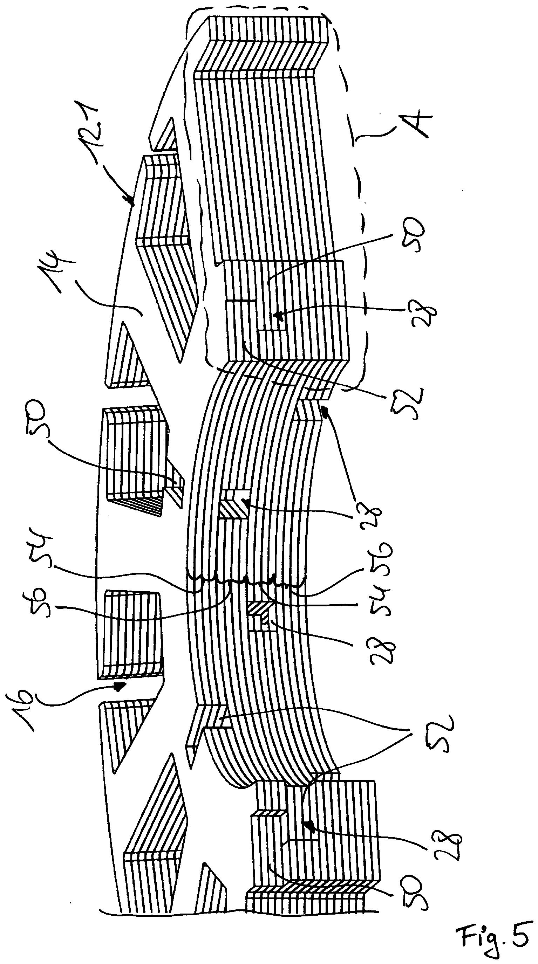

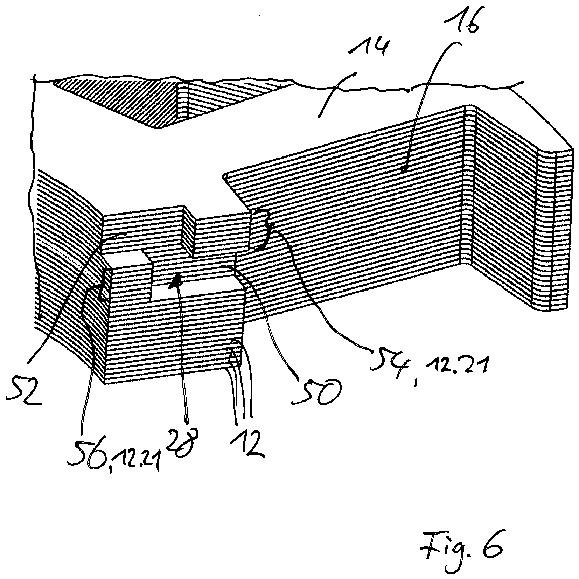

In Fig. 5 und 6 (Darstellung des Details A aus Fig. 5) ist dargestellt, wie ein Anspritzkanal 28 unter Einsatz von zweiten Einzelblechen 12.21 gebildet wird. Zunächst werden im dargestellten Ausführungsbeispiel gemäß Fig. 6 vier zweite Einzelbleche 12.21 kongruent übereinander gestapelt und bilden ein erstes Teilblechpaket 54. Dann wird ein zweites Teilblechpaket 56 hergestellt, das ebenfalls aus vier übereinander gestapelten zweiten Einzelblechen 12.21 besteht, wobei das erste Teilblechpaket 54 gegenüber dem zweiten Teilblechpaket 56 in Umfangsrichtung U um das Differenzrasterwinkelmaß RD gedreht ist, so dass die ersten Ausnehmungen 50 des zweiten Teilblechpakets 56 unterhalb der zweiten Ausnehmung 52 des ersten Teilblechpakets 54 angeordnet sind. Ober- und unterhalb sind erste Einzelbleche 12 angeordnet, die sich von den zweiten Einzelblechen 12.21 dadurch unterscheiden, dass sie keine erste und zweite Ausnehmung 50, 52 aufweisen.

In Fig. 4 ist ein erstes Ausführungsbeispiel einer umspritzten Stator-/ Rotorpaketeinrichtung 10.1 bei dem im mittleren Bereich Anspritzkanäle 28 durch entsprechende Anordnungen von ersten und zweiten Teilblechpaketen 54, 56 unter Einsetzung zweiter Einzelbleche dargestellt ist. Ober- und unterhalb der Teilblechpakete 54, 56 sind erste Einzelbleche 12 übereinander gestapelt.

In Fig. 5 ist eine ausschnittsweise Perspektivdarstellung der Stator-/ Rotorpaketeinrichtung im nicht umspritzten Zustand gemäß der Darstellung von Fig. 4 im Detail dargestellt.

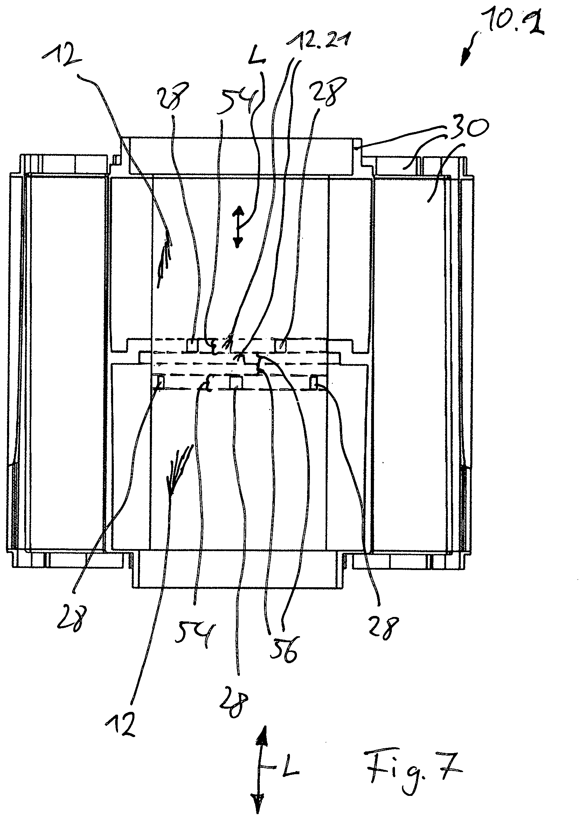

Fig. 7 zeigt in einem Querschnitt eine weitere Ausführungsvariante wie das erste und zweite Teilblechpaket 54, 56 mit den zweiten Einzelblechen 12.21 in einer Variante mit unterschiedlicher Größe des Differenzrasterwinkelmaßes RD ausgebildet sein können. Sowohl in Fig. 4 als auch in Fig. 7 sind insgesamt vier Teilblechpakete 54, 56 übereinander gestapelt, so dass sich eine unterschiedliche geometrische Anordnung der Anspritzkanäle 28 in zwei Anspritzebenen ergibt.

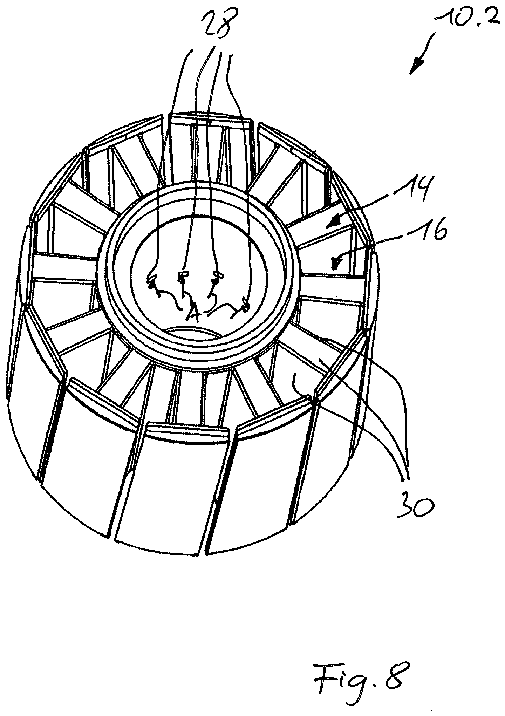

Fig. 8 zeigt eine Perspektivdarstellung einer Stator-/Rotorpaketeinrichtung 10.2 in mit Kunststoff umspritztem Zustand, wobei die Kunststoffschicht insbesondere die Innenkontur der Wickelnute 16 und die oberen und unteren Teilbereiche der Stator-/Rotorpaketeinrichtung 10.2 umgeben.

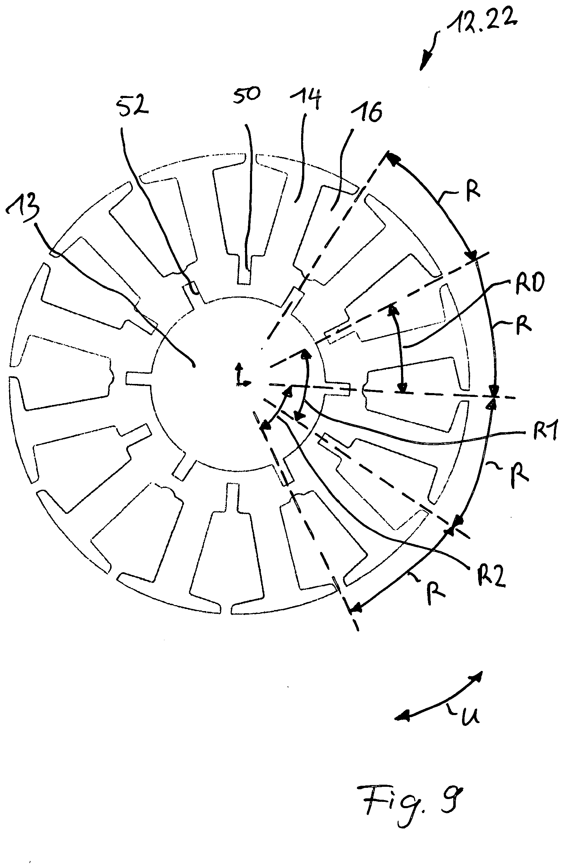

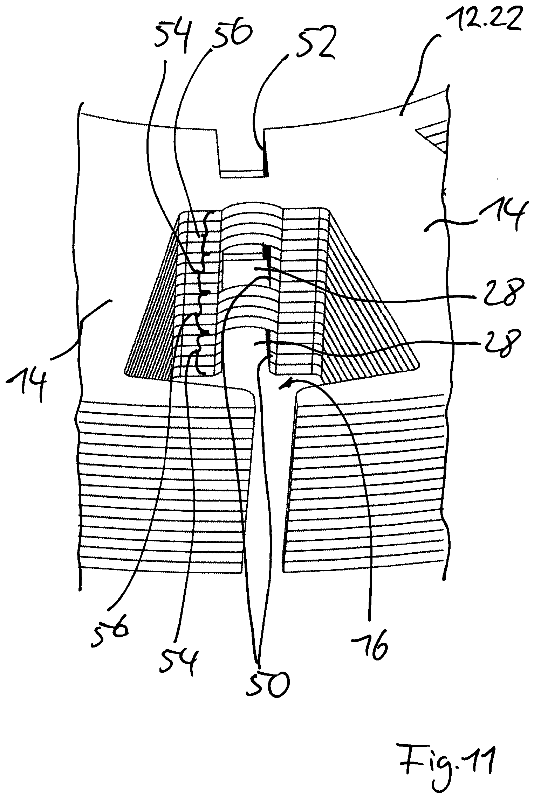

Die Fig. 9 zeigt ein zweites Ausführungsbeispiel eines zweiten Einzelbleches 12.22, das vom prinzipiellen Aufbau her dem zweiten Einzelblech 12.21 gemäß Fig. 1 entspricht. Gleiche Bauteile tragen dasselbe Bezugszeichen und werden daher nicht nochmals erläutert. Der Unterschied zwischen dem zweiten Einzelblech 12.22 gemäß Fig. 9 und dem zweiten Einzelblech 12.21 gemäß Fig. 1 besteht darin, dass das Differenzrasterwinkelmaß RD zwischen den alternierend innen und außen im Bereich des Nutgrunds der Wickelnut 16 angeordneten ersten und zweiten Ausnehmungen 50, 52 dem Rasterwinkelmaß R entspricht das heißt, dass die Ausnehmungen 50, 52 jeweils auf Höhe jeder zweiten Wickelnut 16 angeordnet sind. Der Anspritzkanal 28 wird dadurch gebildet, dass das erste Teilblechpaket 54, gebildet aus übereinander angeordneten zweiten Einzelblechen 12.22, und das zweite Teilblech 26, gebildet aus den zweiten Einzelblechen 12.21, zur kongruenten Übereinanderanordnung lediglich um das Differenzrasterwinkelmaß RD, was dem Rastermaß R entspricht, relativ zueinander in Umfangsrichtung U versetzt angeordnet sind. Mit dieser Ausführungsvariante lässt sich die Anzahl der Anspritzkanäle 28 verdoppeln. Die Details der übereinander angeordneten ersten und zweiten Teilblechpakete 54, 56 sind im Detail in Fig. 11 dargestellt.

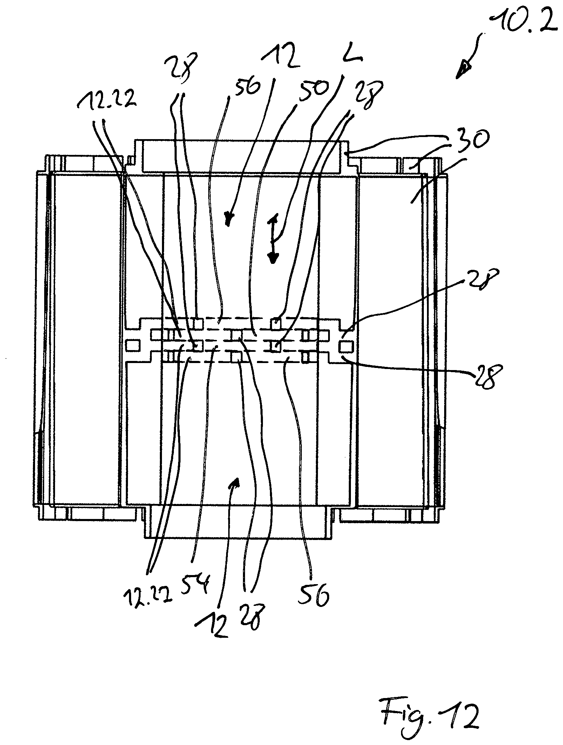

Fig. 12 zeigt einen Querschnitt einer Stator-/Rotorpaketeinrichtung 10.2 unter Einsatz von insgesamt vier übereinander gestapelten ersten und zweiten Teilblechpaketen 54, 56 unter Einsatz der zweiten Einzelbleche 12.22 mit dargestellter Kunststoffumspritzung.

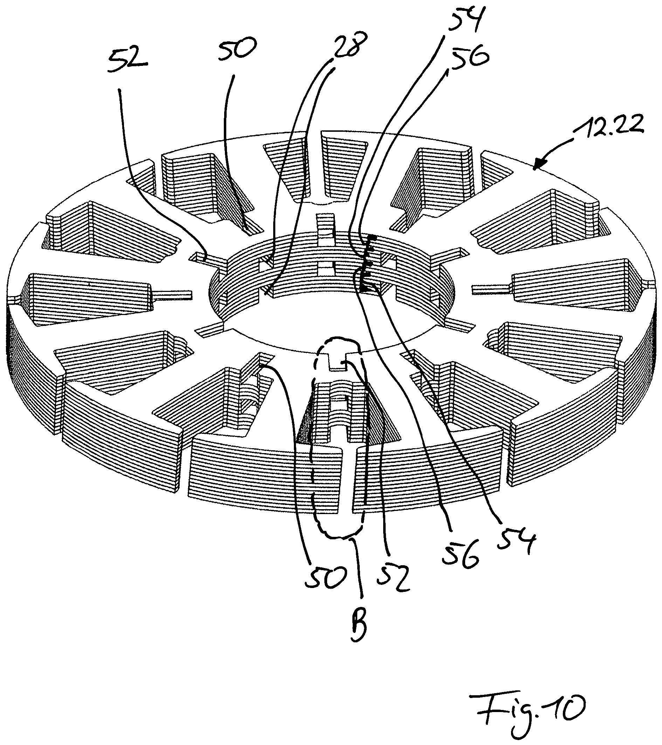

Die Fig. 10 zeigt eine Detailperspektive der Stator-/Rotorpaketeinrichtung 10.2 mit übereinander gestapelten ersten und zweiten Teilblechpaketen 54, 56. Fig. 11 zeigt das Detail B aus Fig. 10.

Die obigen Ausführungsbeispiele zeigen eine Variante bei der zweite Einzelbleche 12.21 beziehungsweise 12.22 eingesetzt werden, wobei die zweiten Einzelbleche 12.21 beziehungsweise 12.22 immer dieselbe geometrische Kontur aufweisen und zur Herstellung der Anspritzkanäle 28 erste und zweite Teilblechpakete 54, 56 gebildet werden durch entsprechende Übereinanderstapelungen der zweiten Einzelbleche 12.21, 12.22, wobei zwischen dem ersten Teilblechpaket 54 und dem zweiten Teilblechpaket 56 vor der Zusammenfügung eine Relativdrehung um das Differenzrasterwinkelmaß RD durchgeführt wird. Der Vorteil dieser Ausführungsform besteht darin, dass lediglich eine geometrische Form des zweiten Einzelbleches 12.21 beziehungsweise 12.22 hergestellt werden muss.

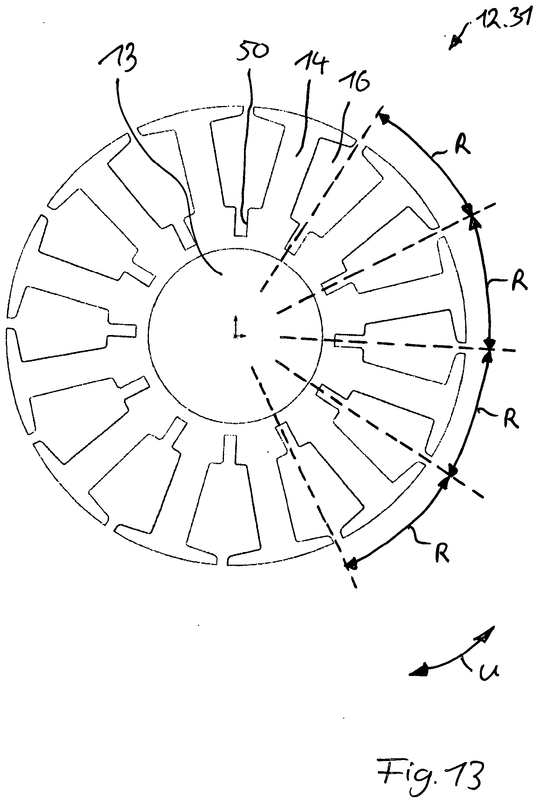

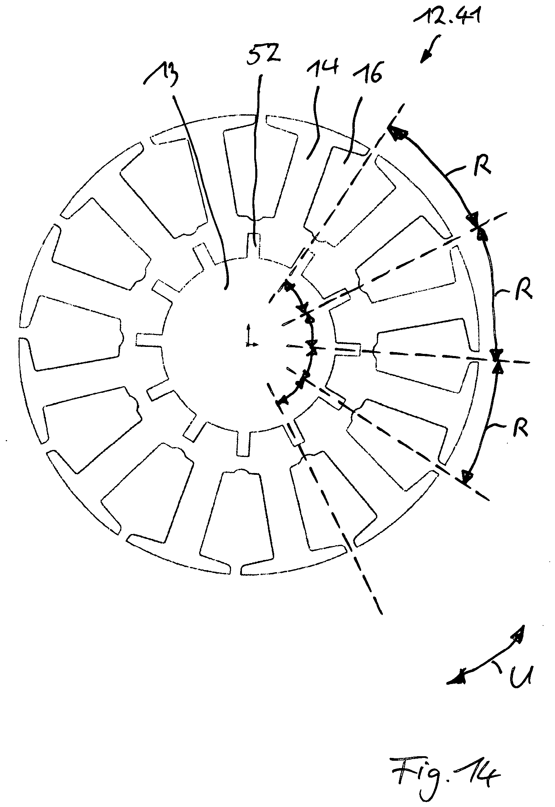

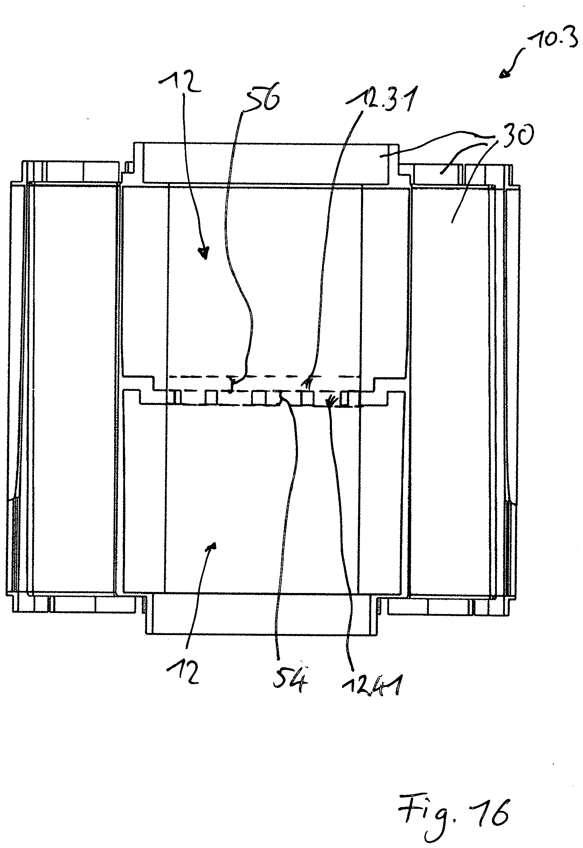

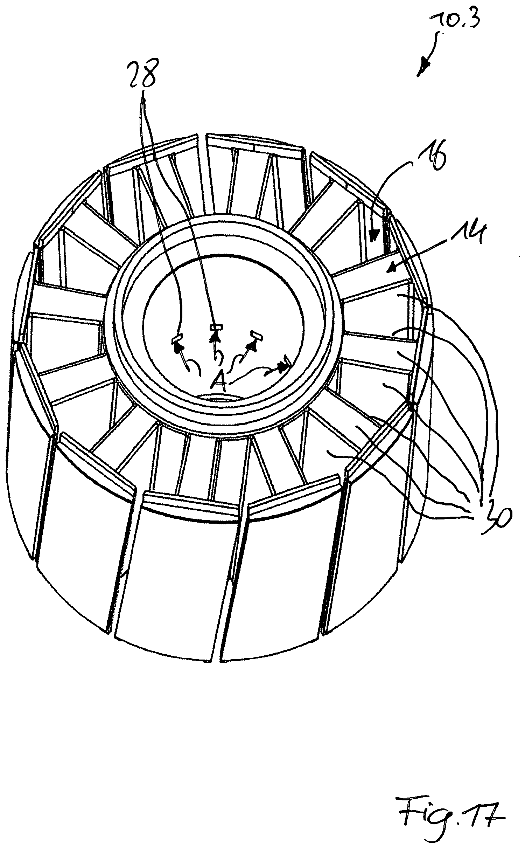

In den Figuren 13 bis 17 ist eine zweite Ausführungsvariante zur Ausbildung einer Stator-/Rotorpaketeinrichtung 10 mit Anspritzkanälen 28 dargestellt, die unter Einsatz von dritten Einzelblechen 12.31 gemäß Fig. 13, vierten Einzelblechen 12.41 gemäß Fig. 14 und ersten Einzelblechen 12 durch entsprechende Übereinanderstapelung gebildet wird. Die dritten und vierten Einzelbleche 12.31, 12.41 weisen im Prinzip denselben geometrischen Aufbau auf, wie die zweiten Einzelbleche 12.22. Gleiche Bauteile tragen dasselbe Bezugszeichen und werden nicht nochmals erläutert.

Im Unterschied zu dem Einzelblech 12.22 gemäß Fig. 9 weist das dritte Einzelblech 12.31 in jedem Nutgrund der Wickelnut 16 eine nach außen offene sacklochartige erste Ausnehmung 50 auf und das vierte Einzelblech 12.41 weist eine dem Nutgrund der Wickelnut gegenüberliegende nach innen offene sacklochartige zweite Ausnehmung 52 auf. Die Geometrie der ersten und zweiten Ausnehmungen 50, 52 entspricht der Geometrie der oben dargestellten ersten und zweiten Ausnehmung 50, 52 gemäß Fig. 2 und 3. Die Anspritzkanäle 28 werden durch einfaches kongruentes Übereinanderstapeln eines ersten Teilblechpaketes 54 bestehend aus mehreren dritten Einzelblechen 12.31 und einem zweiten Teilblechpaket 56 bestehend aus mehreren vierten Einzelblechen 12.41 in einfacher Art und Weise gebildet. Es ist keine Relativdrehung der Teilblechpakete 54, 56 in Umfangsrichtung U zur Ausbildung der Anspritzkanäle 28 erforderlich.

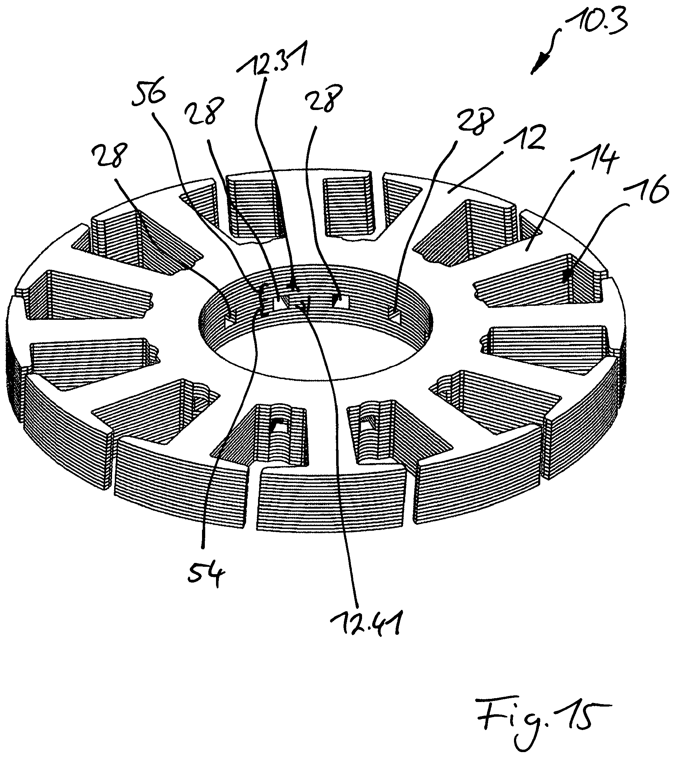

Wie in den Figuren 15, 16 und 17 dargestellt, liegen die Anspritzkanäle in Umfangsrichtung U auf dem selben Höhenniveau in Längsrichtung L und werden durch Übereinanderstapeln des ersten Teilblechpakets 54 und des zweiten Teilblechpakets 56 gebildet. Auch hier sind oberhalb der Teilblechpakete 54, 56 erste Einzelbleche 12 ohne Ausnehmungen vorhanden.

Bei dieser Ausführungsvariante sind somit zwei Varianten, nämlich die dritten Einzelbleche 12.31 und die vierten Einzelbleche 12.41 zur Ausbildung der Anspritzkanäle 28 erforderlich, wobei im dargestellten Ausführungsbeispiel im Bereich jedes Nutgrundes der Wickelnut 16 ein Anspritzkanal 28 vorhanden ist.

Es ist auch möglich die Ausnehmungen 50, 52 des dritten und vierten Einzelbleches 12.31, 12.41 nur in jeder zweiten, dritten usw. Nut vorzusehen, wodurch sich die Anzahl der Anspritzkanäle 28 vermindert.

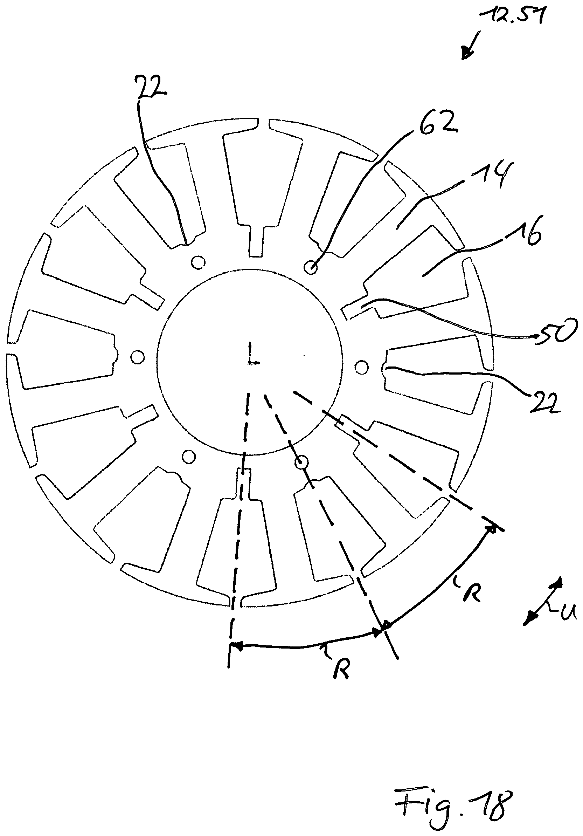

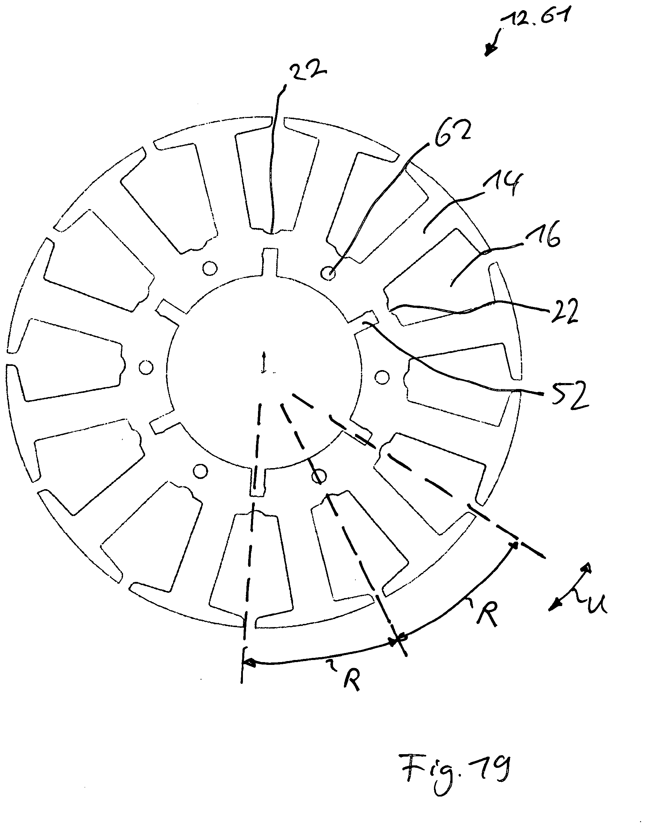

In den Figuren 18 und 19 sind fünfte und sechste Einzelbleche 12.51, 12.61 dargestellt, die nahezu dieselbe Geometrie wie das dritte Einzelblech 12.31 (Fig. 13) und vierte Einzelblech 12.41 (Fig. 14) aufweisen. Ein Unterschied besteht darin, dass die ersten Ausnehmungen 50 beziehungsweise zweiten Ausnehmungen 52 in einem zweifachen Rasterwinkelmaß R in Umfangsrichtung U angeordnet sind und zwischen den Ausnehmungen 50 beziehungsweise den zweiten Ausnehmungen 52 jeweils eine geschlossene, kreisrunde Ausnehmung 62 angeordnet ist. Hinzu kommt als weiterer Unterschied, dass im Nutgrund jeder Wickelnut 16 eine in radialer Richtung nach außen offene Fließkanalausnehmung 22 vorhanden ist, die im Ausführungsbeispiel eine teilkreisförmige Umfangskontur aufweist.

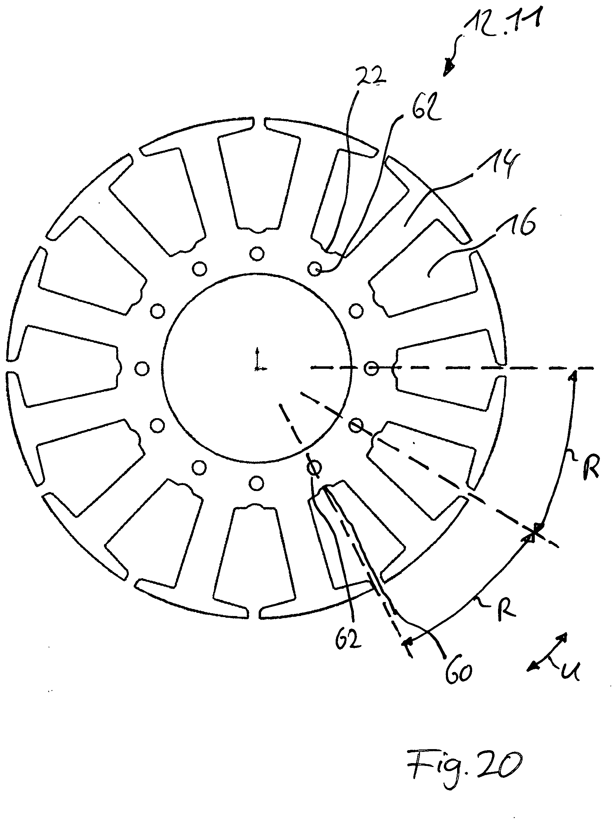

Fig. 20 zeigt ein erstes Einzelblech 12.11 ohne erste und zweite Ausnehmungen 50, 52, wobei in dem Rasterwinkelmaß R die geschlossenen Ausnehmungen 62 in Umfangsrichtung U auf Höhe jeder Wickelnut 16 vorhanden sind und in jedem Nutgrund eine Fließkanalausnehmung 22 vorhanden ist.

Wie bereits oben beschrieben werden durch kongruentes Aufeinanderlegen mehrerer fünfter Einzelbleche 12.51 und durch weiteres Aufeinanderlegen sechster Einzelbleche 12.61 ein erstes Teilblechpaket 54 und ein zweites Teilblechpaket 56 gebildet, die bei aufeinander kongruent angeordneten Blechpakete 54, 56 einen Anspritzkanal 28 bilden. Im Bereich ober- und unterhalb der Teilblechpakete 54, 56 sind erste Einzelbleche 12.11 kongruent angeordnet.

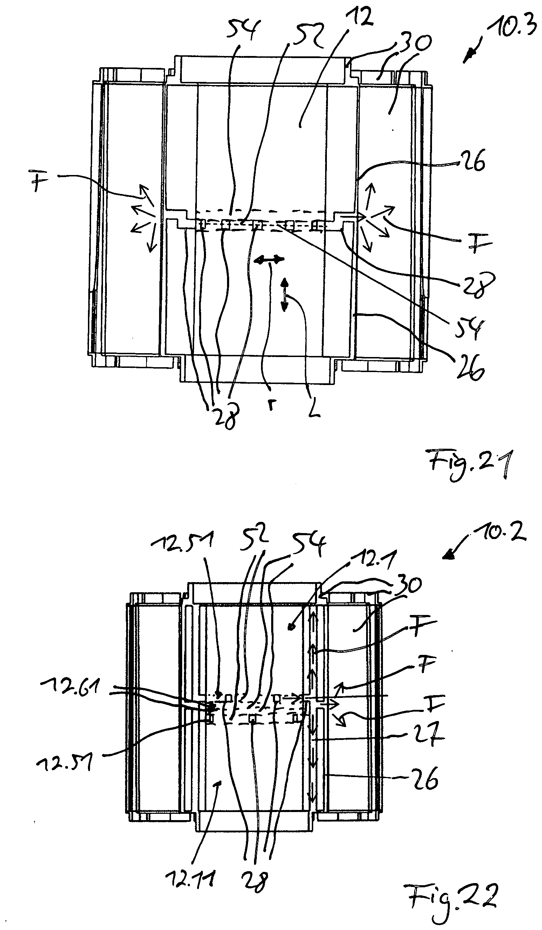

In Fig. 21 sind in einem Schnitt durch eine umspritzte Stator-/Rotorpaketeinrichtung 10.3 schematisch die Fließwege F beim Einspritzvorgang dargestellt, falls nur Fließkanalausnehmungen 22 und somit Fließkanäle 26 vorhanden sind und keine geschlossenen Ausnehmungen 62. Die Anspritzkanäle 28 werden von innen mit Kunststoff beaufschlagt, durchdringen den jeweiligen Anspritzkanal 28 und verteilen sich auf der Innenoberfläche der jeweiligen Wickelnut 16. Eine zuverlässige Umspritzung wird dadurch unterstützt, dass durch die an den fünften, sechsten und ersten Einzelblechen 12.51, 12.61, 12.11 vorhandenen Fließkanalausnehmungen 22, die mit den Anspritzkanälen 28 in Verbindung stehen, jeweils in jedem Nutgrund ein von oben nach unten durchgehender Fließkanal 26 gebildet wird, der insgesamt den Fließquerschnitt vergrößert und eine zuverlässige Umspritzung auch in den weiter von den Anspritzkanälen entfernten Umspritzungsbereichen gewährleistet.

Fig. 22 zeigt schematisch einen Querschnitt durch eine umspritzte Stator-/Rotorpaketeinrichtung 10.2 unter Einsatz der fünften Einzelbleche 12.51, der sechsten Einzelbleche 12.61 und der ersten Einzelbleche 12.1 gemäß den Figuren 18,19 und 20, wobei auch hier die Fließrichtungen F des eingespritzten Kunststoffs dargestellt sind. Durch die übereinander angeordneten geschlossenen Ausnehmungen 62 entstehen von oben nach unten durchgehende Durchspritzkanäle 27, die mit den jeweiligen Anspritzkanälen 28 in Kommunikationsverbindung stehen. Beim Einspritzvorgang wird durch diese Durchspritzfließkanäle die Kunststoffschmelze in den oberen und unteren Randbereich der Stator-/Rotorpaketeinrichtung 10.2 geleitet, was bezüglich des Umspritzungsergebnisses große Vorteile mit sich bringt, da im oberen und unteren Bereich relativ große Bereiche mit Kunststoff umspritzt beziehungsweise gespritzt werden müssen. Gleichzeitig findet eine gleichmäßige Verteilung des Kunststoffes für die Umspritzung der Innenkontur der Wickelnute durch die Fließkanäle 26 statt.

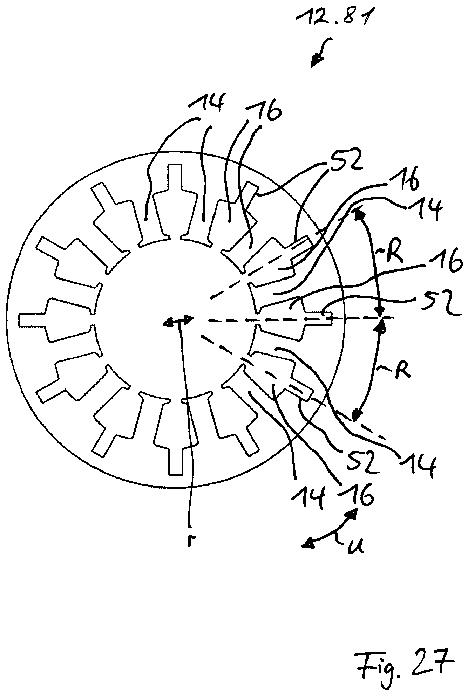

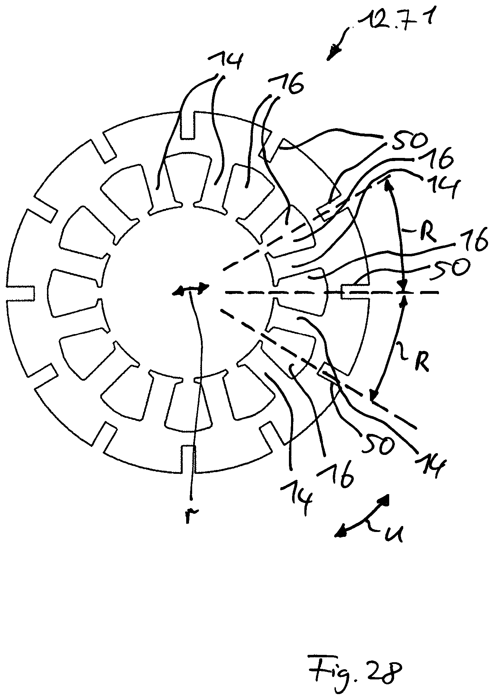

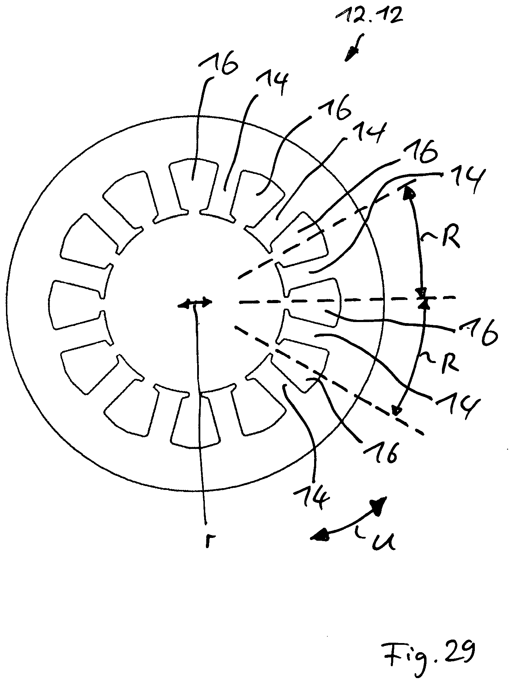

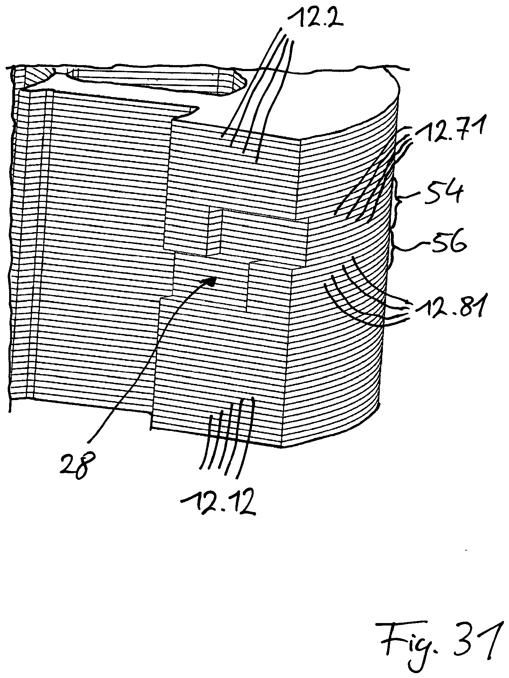

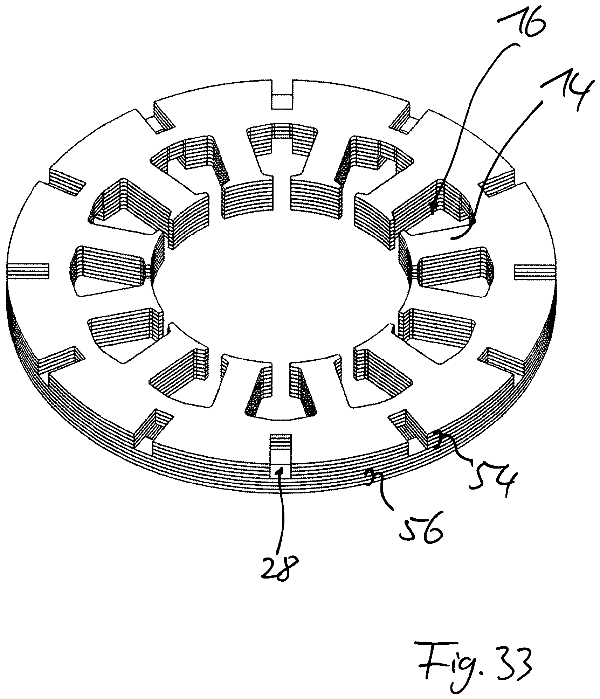

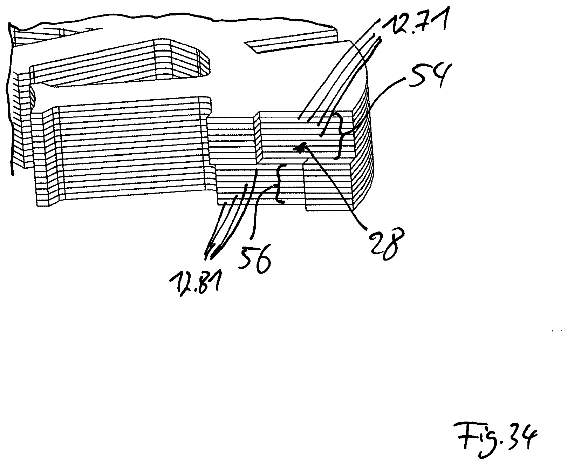

In den Figuren 27 bis 33 sind Einzelbleche für eine Stator-/Rotorpaketeinrichtung 10.4 (siehe Fig. 30) dargestellt, die als Innenpolläufer ausgebildet sind. Zur Bildung von Anspritzkanälen 28 werden siebte und achte Einzelbleche 12.71, 12.81 verwendet, die in Fig. 27 und 28 dargestellt sind. Vom prinzipiellen Aufbau her entsprechen diese Einzelbleche den dritten und vierten Einzelblechen 12.31, 12.41, jedoch mit dem Unterschied, dass die Wickelnute 16 nicht nach außen sondern nach innen offen ausgebildet sind. Gleiche Bauteile tragen dasselbe Bezugszeichen und werden nicht nochmals erläutert. Auch hier ist bei dem achten Einzelblech 12.81 in jedem Nutgrund eine zweite nach innen offene Ausnehmung 52 in dem Rasterwinkelmaß R in Umfangsrichtung U angeordnet und im siebten Einzelblech 12.71 ist im Ausführungsbeispiel die erste nach außen offene Ausnehmung 50 in dem Rastermaß R in Umfangsrichtung U außenseitig angeordnet. Durch Übereinanderlegen von einem ersten Teilblechpaket 54, bestehend aus mehreren siebten kongruent übereinander angeordneten Einzelblechen 12.71 und einem zweiten Teilblechpaket 56, bestehend aus mehreren kongruent übereinander angeordneten achten Einzelblechen 12.81, entstehen die Anspritzkanäle 28 (siehe Fig. 31 bis 34). Oberhalb des ersten Teilblechpakets 54 und unterhalb des zweiten Teilblechpakets 56 sind kongruent übereinander gestapelte erste Einzelbleche 12.12 ohne Ausnehmungen angeordnet, die in Fig. 29 dargestellt sind.

Die Fig. 30 zeigt eine umspritzte Stator-/Rotorpaketeinrichtung 10.4 mit außenseitig vorhandenen Anspritzkanälen 28, die in Anspritzpunkten A von außen angespritzt werden.

Durch die oben dargestellte Ausgestaltung unterschiedlicher Einzelbleche, die zu Teilblechpaketen zusammen gefügt werden können, mit jeweils überlappenden ersten und zweiten Ausnehmungen, können in Längsrichtung L einer Stator-/Rotorpaketeinrichtung 10 in Umfangsrichtung U rastermäßig verteilt angeordnete Anspritzkanäle 28 in jeder beliebigen Höhenposition ausgebildet werden. Auch die Anzahl der Anspritzkanäle sowohl in Umfangsrichtung U als auch in Höhenrichtung H ist variabel. Je nach Ausbildung der Einzelbleche kann das Anspritzen von außen oder von innen her über die Anspritzkanäle 28 erfolgen. Die Anspritzkanäle 28 gewährleisten eine qualitativ hochwertige Kunststoffeinbringung sowohl im Beschichtungsbereich der Innenkontur der Wickelnut als auch im oberen und unteren Bereich der Stator-/Rotorpaketeinrichtung 10. Die Umspritzung der oberen und unteren Randbereiche wird qualitativ dadurch verbessert, dass Durchspritzkanäle 27, gebildet aus übereinander angeordneten geschlossenen Ausnehmungen 62 der Einzelbleche, die mit den Anspritzkanälen 28 in Fließverbindung stehen, vorgesehen werden. Die Qualität der hergestellten Kunststoffumspritzung wird weiterhin durch die Ausbildung von in Längsrichtung durchgehenden Fließkanälen 26 im Nutgrund der Wickelnute 16, die von übereinander angeordneten Fließkanalausnehmungen 22 gebildet werden, unterstützt.

Die Kunststoffspritztechnologie zur Ausbildung der Kunststoffumspritzung ist dem Fachmann bekannt, insbesondere die Verwendung entsprechender Formeinsätze, Kunststoffspritzdüsen und Druckerzeugungsaggregaten. Auf eine detaillierte Beschreibung dieser Technologie wird daher verzichtet.

Die dargestellten konstruktiven Ausgestaltungen stellen nur beispielhafte Ausführungsformen dar. Insbesondere können anderartige Geometrien und Anordnungen der Polschuhe problemlos umgesetzt werden, ohne dass auf die vorteilhaften Anspritzkanäle verzichtet werden muss.

## Patentansprüche

1. Stator-/Rotorvorrichtung für Elektomotoren mit
- zumindest einer oder mehreren übereinander gestapelten Stator-/Rotorpaketeinrichtung/en (10.1,10.2,10.3), wobei
- - die Stator-/Rotorpaketeinrichtungen (10.1, 10.2, 10.3) jeweils als zu einer Drehachse (D) rotationssymmetrisch ausgebildetes Bauteil ausgebildet ist/sind,
- mit einer zentralen Innenausnehmung (13) und mit jeweils übereinander gestapelt angeordneten ersten Einzelblechen (12.1),
- - die ersten Einzelbleche (12.1) eine rotationssymmetrische Umfangskontur mit in Umfangsrichtung (U) in einem vorgegebenen Rasterwinkelmaß (R) beabstandet angeordnete Vorsprungeinrichtungen aufweisen, die im übereinander gestapelten Zustand nach innen oder außen weisende Polschuhe (14) bilden, die von einem elektrisch leitenden Stromleiter jeweils umwickelt sind und
- - jeweils zwischen den Polschuhen (14) in dem vorgegebenen Rasterwinkelmaß (R) Wickelnute (16) vorhanden sind,
- - zumindest die Innenumfangskontur jeder Wickelnut (16) und die Ober-, Unterseite der Polschuhe (14) eine elektrisch isolierende gespritzte Kunststoffschicht aufweist,
- wobei
- die Stator-/Rotorpaketeinrichtung (10) zumindest ein erstes Teilblechpaket (54) mit mehreren übereinander angeordneten Einzelblechen (12.21, 12.22, 12.31, 12.41) aufweist, die in dem nach außen/innen weisenden Innenbereich des Nutgrundes der Wickelnut (16) zumindest eine erste nach außen/innen offene Ausnehmung (50) mit einer ersten Tiefe (t1) in Radialrichtung (r) aufweist, wobei die ersten Ausnehmungen (50) jedes Einzelbleches des ersten Teilblechpaketes (54) kongruent übereinander angeordnet sind,
- wobei die Stator- / Rotorpaketeinrichtung (10) ein ober- oder unterseitig des ersten Teilblechpaketes (54) angeordnetes zweites Teilblechpaket (56) mit mehreren übereinander angeordneten Einzelblechen (12.21, 12.22, 12.31, 12.41) aufweist, die in dem dem Nutgrund der Wickelnut (16) gegenüber liegenden Bereich, das heißt zur Innenausnehmung (13) hin oder nach außen hin, zumindest eine weitere nach innen/außen offene Ausnehmung (52) mit einer zweiten Tiefe (t2) in Radialrichtung aufweist, wobei die zweiten Ausnehmungen (52) jedes Einzelblechs des zweiten Teilblechpaketes (56) kongruent übereinander angeordnet sind,
- wobei das erste und zweite Teilblechpaket (54, 56) so zueinander angeordnet sind, dass sich die ersten und zweiten Ausnehmungen (50, 52) an derselben Umfangs-winkelposition angeordnet sind und die Tiefe (t1) und (t2) der ersten und zweiten Ausnehmungen (50, 52) so groß sind, dass sich die ersten und zweiten Ausnehmungen (50, 52) in einer Draufsicht gesehen bereichsweise überlappen, so dass ein von innen nach außen oder von außen nach innen durchgehender stufenförmiger Anspritzkanal (28) für die Kunststoffschicht (18) gebildet wird,
- wobei ober- oder unterhalb des ersten und/oder zweiten Teilblechpakets (54, 56) erste Einzelbleche ohne erste und zweite Ausnehmungen (50, 52) angeordnet sind.

2. Stator-/Rotorvorrichtung nach Anspruch 1,
- **dadurch gekennzeichnet, dass**
- die Einzelbleche als zweite Einzelbleche (12.21, 12.22) ausgebildet sind, die das erste und zweite Teilblechpaket (54, 56) bilden, wobei die ersten und zweiten Ausnehmungen (50, 52) jeweils an einem Einzelblech vorhanden sind, die ersten Ausnehmungen (50) in radialer Umfangsrichtung in einem ersten Rasterwinkelmaß (R1) angeordnet sind, die zweiten Ausnehmungen (52) in Umfangsrichtung (U) in einem zweiten Rasterwinkelmaß (R2) angeordnet sind, wobei die ersten und zweiten Ausnehmungen (50, 52) alternierend außen und innen in einem Differenzrasterwinkelmaß (RD) angeordnet sind und die ersten und zweiten Rasterwinkelmaße (R1 und R2) dem zwei- oder mehrfachen des Rasterwinkelmaßes (R) der Wickelnut (16) entsprechen und das Differenzrasterwinkelmaß (RD) dem ein- oder mehrfachen des vorgegebenen Rasterwinkelmaßes (R) der Wickelnut (16) entspricht,
- das zweite Teilblechpaket (56) gegenüber dem ersten Teilblechpaket (54) um das Differenzrasterwinkelmaß (RD) verdreht angeordnet ist.

3. Stator-/Rotorvorrichtung nach Anspruch 1,
- **dadurch gekennzeichnet, dass**
- das erste Teilblechpaket (54) dritte Einzelbleche (12.31) aufweist mit ersten nach außen oder innen offenen Ausnehmungen (50), die in Umfangsrichtung (U) in einem ersten vorgegebenen Rasterwinkelmaß (R1) jeweils im Nutgrund der Wickelnut (16) angeordnet sind,
- das zweite Teilblechpaket (56) vierte Einzelbleche (12.41) aufweist mit zweiten nach innen oder außen offenen Ausnehmungen (52), die in Umfangsrichtung (U) in einem zweiten vorgegebenen Rasterwinkelmaß (R2) gegenüber dem Nutgrund angeordnet sind,
- wobei das erste und zweite Rasterwinkelmaß (R1, R2) ein einfaches oder mehrfaches des vorgegebenen Rasterwinkelmaßes (R) der Wickelnut (16) entspricht,
- das zweite Teilblechpaket (56) gegenüber dem ersten Teilblechpaket (54) in Umfangsrichtung (U) so positioniert ist, dass sich die ersten und zweiten Ausnehmungen (50, 52) in einer Draufsicht gesehen bereichsweise überlappen.

4. Stator-/Rotorvorrichtung nach Anspruch 2 oder 3,
- **dadurch gekennzeichnet, dass**
- das erste und zweite Rasterwinkelmaß (R1, R2) und das Differenzrasterwinkelmaß (RD) dem einfachen, zweifachen oder mehrfachen des Rasterwinkelmaßes (R) der Wickelnut (16) entspricht.

5. Stator-/Rotorvorrichtung nach Anspruch 2,
- **dadurch gekennzeichnet, dass**
- die ersten Einzelbleche (12) in dem Nutgrund zumindest eine nach außen/innen offene Fließkanalausnehmung (60) aufweisen,
- die zweiten Einzelbleche (12.21, 12.22) in den Nutgründen, die keine erste Ausnehmung (50) aufweisen, ebenfalls eine Fließkanalausnehmung (60) aufweisen,
- so dass sich bei aufeinander gestapelten ersten und zweiten Einzelblechen (12.21, 12.22) ein in Längsrichtung (L) verlaufender durchgehender Fließkanal (26) ergibt, der mit dem Anspritzkanal (28) in Kommunikationsverbindung steht.

6. Stator-/Rotorvorrichtung nach Anspruch 3,
- **dadurch gekennzeichnet, dass**
- die ersten Einzelbleche (12) in dem Nutgrund zumindest eine nach außen/innen offene Fließkanalausnehmung (60) aufweisen,
- die vierten Einzelbleche (12.41) in dem Nutgrund zumindest eine nach außen/innen offene Fließkanalausnehmung (60) aufweisen,
- so dass sich bei aufeinander gestapelten ersten, dritten und vierten Einzelblechen (12.21, 12.31, 12.41) ein in Längsrichtung (L) durchgehender Fließkanal (26) im Nutgrund ergibt, der mit den Anspritzkanal (28) in Kommunikationsverbindung steht.

7. Stator-/Rotorvorrichtung nach einem oder mehreren der Ansprüche 3,4,6,
- **dadurch gekennzeichnet, dass**
- die ersten Einzelbleche (12) in einem einfachen oder mehrfachen Rasterwinkelmaß (R) in Umfangsrichtung (U) in dem Verbindungssteg zwischen den Vorsprungeinheiten geschlossene Ausnehmungen (62) aufweisen, die bei aufeinander gestapelten ersten, dritten und vierten Einzelblechen (12, 12.31, 12.41) ein in Längsrichtung (L) durchgehend verlaufenden Durchspritzfließkanal (27) bilden, der mit den durch die ersten und zweiten Ausnehmungen (50, 52) der aufeinander gestapelten dritten und vierten Einzelbleche (12.31, 12.41) gebildeten in radialer Richtung (r) verlaufenden Anspritzkanal (28) in Längsrichtung (L) in Kommunikationsverbindung steht.

8. Stator-/Rotorvorrichtung nach einem oder mehreren der vorstehenden Ansprüche,
- **dadurch gekennzeichnet, dass**
- die ersten und zweiten Ausnehmungen (50,52) zur Bildung der Anspritzkanäle (28) im aufeinander gestapelten Zustand der zweiten, dritten und vierten Einzelbleche in einer Draufsicht gesehen eine U-förmige oder trapezförmige Umfangsstruktur mit der Tiefe (t1, t2) und einer gewählten Öffnungsbreite (b) aufweisen.

9. Stator-/Rotorvorrichtung nach einem oder mehreren der vorstehenden Ansprüche,
- **dadurch gekennzeichnet, dass**
- die Anzahl der aufeinander gestapelten zweiten, dritten beziehungsweise vierten Einzelbleche (12.21, 12.22, 12.31, 12.41) so gewählt ist, dass die von der Anzahl der übereinander gestapelten Einzelbleche bestimmten Höhe (h) des gebildeten Anspritzkanals (28) im Wesentlichen seiner Breite (b) entspricht.

10. Stator-/Rotorvorrichtung nach einem oder mehreren der vorstehenden Ansprüche,
- **dadurch gekennzeichnet, dass**
- die Wickelnute (16) als in Längsrichtung (L) gerade oder schräg verlaufende Nute ausgebildet sind.

11. Stator-/Rotorvorrichtung nach einem oder mehreren der vorstehenden Ansprüche,
- **dadurch gekennzeichnet, dass**
- der/die Anspritzkanal/Anspritzkanäle (28) im oberen und/oder unteren Stirnrandbereich und/oder im mittleren Bereich der Stator-/Rotorpaketeinrichtung vorhanden ist/ sind.

12. Stator-/Rotorvorrichtung nach Anspruch 5 oder 6,
- **dadurch gekennzeichnet, dass**
- die Fließkanalausnehmung/en (60) jeweils eine konkave Umfangskontur aufweist/en.

13. Stator-/Rotorvorrichtung nach Anspruch 2,
- **dadurch gekennzeichnet, dass**
- die Fließkanalausnehmung (22) eine polygonartige oder teilkreisförmige Umfangskontur aufweist.

14. Stator-/Rotorvorrichtung nach Anspruch 7,
- **dadurch gekennzeichnet, dass**
- an mehreren oder allen Wickelnuten (16) zumindest ein Fließkanal (26) vorhanden ist.

15. Stator-/Rotorvorrichtung nach einem oder mehreren der vorstehenden Ansprüche 8 bis 11,
- **dadurch gekennzeichnet, dass**
- die maximale Tiefe der Fließkanalausnehmung (22) ein ein- oder mehrfaches der Dicke der Kunststoffschicht (18) beträgt.

16. Stator-/Rotorvorrichtung nach Anspruch 7,
- **dadurch gekennzeichnet, dass**
- die geschlossene Ausnehmung (62) eine kreisförmige Umfangskontur aufweist.

17. Stator-/Rotorvorrichtung nach Anspruch 7 oder 16,
- **dadurch gekennzeichnet, dass**
- die geschlossene Ausnehmung (62) in Umfangsrichtung (U) in einem ein- oder mehrfachen Rasterwinkelmaß (R) der Winkelnut (16) beabstandet angeordnet sind.

18. Stator-/Rotorvorrichtung nach einem oder mehreren der vorstehenden Ansprüche,
- **dadurch gekennzeichnet, dass**
- mehrere erste und zweite Teilblechpakete (54, 56) übereinander gestapelt vorhanden sind.

19. Stator-/Rotorvorrichtung nach einem oder mehreren der vorstehenden Ansprüche,
- **dadurch gekennzeichnet, dass**
- die Kunststoffschicht (30) aus thermoplastischem oder duroplastischem Kunststoff besteht.

20. Verfahren zur Herstellung einer Kunststoffbeschichtung einer Stator-/Rotorvorrichtung (10.1, 10.2, 10.3, 10.4), die folgende Merkmale aufweist:
- zumindest einer oder mehreren übereinander gestapelten Stator-/Rotorpaketeinrichtung/en (10.1, 10.2, 10.3), wobei
- - die Stator-/Rotorpaketeinrichtungen (10.1, 10.2, 10.3) jeweils als zu einer Drehachse (D) rotationssymmetrisch ausgebildetes Bauteil ausgebildet ist/sind,
- mit einer zentralen Innenausnehmung (13) und mit jeweils übereinander gestapelt angeordneten ersten Einzelblechen (12.1),
- - die ersten Einzelbleche (12.1) eine rotationssymmetrische Umfangskontur mit in Umfangsrichtung (U) in einem vorgegebenen Rasterwinkelmaß (R) beabstandet angeordnete Vorsprungeinrichtungen aufweisen, die im übereinander gestapelten Zustand nach innen oder außen weisende Polschuhe (14) bilden, die von einem elektrisch leitenden Stromleiter jeweils umwickelt sind und
- - jeweils zwischen den Polschuhen (14) in dem vorgegebenen Rasterwinkelmaß (R) Wickelnute (16) vorhanden sind,
- - zumindest die Innenumfangskontur jeder Wickelnut (16) und die Ober-, Unterseite der Polschuhe (14) eine elektrisch isolierende gespritzte Kunststoffschicht aufweist, wobei
- die Stator-/Rotorpaketeinrichtung (10) zumindest ein erstes Teilblechpaket (54) mit mehreren übereinander angeordneten Einzelblechen (12.21, 12.22, 12.31, 12.41) aufweist, die in dem nach außen/innen weisenden Innenbereich des Nutgrundes der Wickelnut (16) zumindest eine erste nach außen/innen offene Ausnehmung (50) mit einer ersten Tiefe (t1) in Radialrichtung (r) aufweist, wobei die ersten Ausnehmungen (50) jedes Einzelbleches des ersten Teilblechpaketes (54) kongruent übereinander angeordnet sind,
- wobei die Stator- / Rotorpaketeinrichtung (10) ein ober- oder unterseitig des ersten Teilblechpaketes (54) angeordnetes zweites Teilblechpaket (56) mit mehreren übereinander angeordneten Einzelblechen (12.21, 12.22, 12.31, 12.41) aufweist, die in dem dem Nutgrund der Wickelnut (16) gegenüber liegenden Bereich, das heißt zur Innenausnehmung (13) hin oder nach außen hin, zumindest eine weitere nach innen/außen offene Ausnehmung (52) mit einer zweiten Tiefe (t2) in Radialrichtung aufweist, wobei die zweiten Ausnehmungen (52) jedes Einzelblechs des zweiten Teilblechpaketes (56) kongruent übereinander angeordnet sind,
- wobei das erste und zweite Teilblechpaket (54, 56) so zueinander angeordnet sind, dass sich die ersten und zweiten Ausnehmungen (50, 52) an derselben Umfangs-winkelposition angeordnet sind und die Tiefe (t1) und (t2) der ersten und zweiten Ausnehmungen (50, 52) so groß sind, dass sich die ersten und zweiten Ausnehmungen (50, 52) in einer Draufsicht gesehen bereichsweise überlappen, so dass ein von innen nach außen oder von außen nach innen durchgehender stufenförmiger Anspritzkanal (28) für die Kunststoffschicht (18) gebildet wird,
- wobei ober- oder unterhalb des ersten und/oder zweiten Teilblechpakets (54, 56) erste Einzelbleche ohne erste und zweite Ausnehmungen (50, 52) angeordnet sind,
- **dadurch gekennzeichnet, dass**
- nach Einbringung der Einzelbleche (12.11, 12.12, 12.21, 12.22, 12.31, 12.41, 12.51, 12.61, 12.71, 12.81) oder Einzelblechpakete (54, 56) in ein Spritzgießwerkzeug der Kunststoff über die stufenförmigen Anspritzkanäle (28) eingespritzt wird.

21. Verfahren zur Herstellung einer Kunststoffbeschichtung einer Stator-/Rotorvorrichtung (10.1, 10.2,10.3, 10.4), die folgende Merkmale aufweist:
- zumindest einer oder mehreren übereinander gestapelten Stator-/Rotorpaketeinrichtung/en (10.1, 10.2, 10.3), wobei
- - die Stator-/Rotorpaketeinrichtungen (10.1, 10.2, 10.3) jeweils als zu einer Drehachse (D) rotationssymmetrisch ausgebildetes Bauteil ausgebildet ist/sind,
- mit einer zentralen Innenausnehmung (13) und mit jeweils übereinander gestapelt angeordneten ersten Einzelblechen (12.1),
- - die ersten Einzelbleche (12.1) eine rotationssymmetrische Umfangskontur mit in Umfangsrichtung (U) in einem vorgegebenen Rasterwinkelmaß (R) beabstandet angeordnete Vorsprungeinrichtungen aufweisen, die im übereinander gestapelten Zustand nach innen oder außen weisende Polschuhe (14) bilden, die von einem elektrisch leitenden Stromleiter jeweils umwickelt sind und
- - jeweils zwischen den Polschuhen (14) in dem vorgegebenen Rasterwinkelmaß (R) Wickelnute (16) vorhanden sind,
- - zumindest die Innenumfangskontur jeder Wickelnut (16) und die Ober-, Unterseite der Polschuhe (14) eine elektrisch isolierende gespritzte Kunststoffschicht aufweist,
wobei
- die Stator-/Rotorpaketeinrichtung (10) zumindest ein erstes Teilblechpaket (54) mit mehreren übereinander angeordneten Einzelblechen (12.21, 12.22, 12.31, 12.41) aufweist, die in dem nach außen/innen weisenden Innenbereich des Nutgrundes der Wickelnut (16) zumindest eine erste nach außen/innen offene Ausnehmung (50) mit einer ersten Tiefe (t1) in Radialrichtung (r) aufweist, wobei die ersten Ausnehmungen (50) jedes Einzelbleches des ersten Teilblechpaketes (54) kongruent übereinander angeordnet sind,
- wobei die Stator- / Rotorpaketeinrichtung (10) ein ober- oder unterseitig des ersten Teilblechpaketes (54) angeordnetes zweites Teilblechpaket (56) mit mehreren übereinander angeordneten Einzelblechen (12.21, 12.22, 12.31, 12.41) aufweist, die in dem dem Nutgrund der Wickelnut (16) gegenüber liegenden Bereich, das heißt zur Innenausnehmung (13) hin oder nach außen hin, zumindest eine weitere nach innen/außen offene Ausnehmung (52) mit einer zweiten Tiefe (t2) in Radialrichtung aufweist, wobei die zweiten Ausnehmungen (52) jedes Einzelblechs des zweiten Teilblechpaketes (56) kongruent übereinander angeordnet sind,
- wobei das erste und zweite Teilblechpaket (54, 56) so zueinander angeordnet sind, dass sich die ersten und zweiten Ausnehmungen (50, 52) an derselben Umfangs-winkelposition angeordnet sind und die Tiefe (t1) und (t2) der ersten und zweiten Ausnehmungen (50, 52) so groß sind, dass sich die ersten und zweiten Ausnehmungen (50, 52) in einer Draufsicht gesehen bereichsweise überlappen, so dass ein von innen nach außen oder von außen nach innen durchgehender stufenförmiger Anspritzkanal (28) für die Kunststoffschicht (18) gebildet wird,
- wobei ober- oder unterhalb des ersten und/oder zweiten Teilblechpakets (54, 56) erste Einzelbleche ohne erste und zweite Ausnehmungen (50, 52) angeordnet sind,
- die ersten Einzelbleche (12) in dem Nutgrund zumindest eine nach außen/innen offene Fließkanalausnehmung (60) aufweisen,
- die zweiten Einzelbleche (12.21, 12.22) in den Nutgründen, die keine erste Ausnehmung (50) aufweisen, ebenfalls eine Fließkanalausnehmung (60) aufweisen,
- so dass sich bei aufeinander gestapelten ersten und zweiten Einzelblechen (12.21, 12.22) ein in Längsrichtung (L) verlaufender durchgehender Fließkanal (26) ergibt, der mit dem Anspritzkanal (28) in Kommunikationsverbindung steht,
- **dadurch gekennzeichnet, dass**
- nach Einbringung der Einzelbleche (12.11, 12.12, 12.21, 12.22, 12.31, 12.41, 12.51, 12.61, 12.71, 12.81) oder Einzelblechpakete (54, 56) in ein Spritzgießwerkzeug der Kunststoff über die stufenförmigen Anspritzkanäle (28) und die an die stufenförmigen Anspritzkanäle (28) anschließenden durchgehenden Fließkanäle (26) eingespritzt wird.

## Claims

1. Stator/rotor device for electric motors, having
- at least one or more stator/rotor assembly/assemblies (10.1, 10.2, 10.3) stacked on top of one another, wherein
-- the stator/rotor assemblies (10.1, 10.2, 10.3) is/are each in the form of a component which is rotationally symmetrical in relation to an axis of rotation (D),
- having a central inner recess (13) and having first individual laminations (12.1) each stacked on top of one another,
-- the first individual laminations (12.1) have a rotationally symmetrical circumferential contour with projections that are spaced apart in the circumferential direction (U) in a predefined screen angle dimension (R) and, when stacked on top of one another, form inwardly or outwardly pointing pole shoes (14) around each of which an electrically conductive conductor is wound, and
-- respective winding slots (16) are present between the pole shoes (14) in the predefined screen angle dimension (R),
-- at least the inner circumferential contour of each winding slot (16) and the top side and bottom side of the pole shoes (14) has an electrically insulating, injection moulded plastics layer,
- wherein
- the stator/rotor assembly (10) has at least one first partial laminated core (54) with multiple individual laminations (12.21, 12.22, 12.31, 12.41), which are arranged on top of one another and have at least one first outwardly/inwardly open recess (50), with a first depth (t1) in the radial direction (r), in the outwardly/inwardly facing inner region of the slot base of the winding slot (16), wherein the first recesses (50) of each individual lamination of the first partial laminated core (54) are arranged congruently on top of one another,
- wherein the stator/rotor assembly (10) has a second partial laminated core (56), which is arranged on the top side or the bottom side of the first partial laminated core (54) and has multiple individual laminations (12.21, 12.22, 12.31, 12.41) that are arranged on top of one another and have at least one further inwardly/outwardly open recess (52), having a second depth (t2) in the radial direction, in the region opposite the slot base of the winding slot (16), that is to say the region facing the inner recess (13) or facing outwards, wherein the second recesses (52) of each individual lamination of the second partial laminated core (56) are arranged congruently on top of one another,
- wherein the first and the second partial laminated core (54, 56) are arranged in relation to one another such that the first and second recesses (50, 52) are arranged at the same circumferential angular position, and the depths (t1) and (t2) of the first and second recesses (50, 52) are large enough that the first and second recesses (50, 52) overlap in certain regions as seen from above, with the result that a step-shaped runner (28), which is continuous from the inside outwards or from the outside inwards, for the plastics layer (18) is formed,
- wherein first individual laminations without first and second recesses (50, 52) are arranged above or below the first and/or the second partial laminated core (54, 56).

2. Stator/rotor device according to Claim 1,
- **characterized in that**
- the individual laminations are in the form of second individual laminations (12.21, 12.22) which form the first and the second partial laminated core (54, 56), wherein the first and second recesses (50, 52) are present on a respective individual lamination, the first recesses (50) are arranged in a first screen angle dimension (R1) in the radial circumferential direction, the second recesses (52) are arranged in a second screen angle dimension (R2) in the circumferential direction (U), wherein the first and second recesses (50, 52) are arranged alternately on the outside and on the inside in a differential screen angle dimension (RD) and the first and second screen angle dimensions (R1 and R2) correspond to two or multiple screen angle dimensions (R) of the winding slot (16) and the differential screen angle dimension (RD) corresponds to one or multiple predefined screen angle dimensions (R) of the winding slot (16),
- the second partial laminated core (56) is rotated by the differential screen angle dimension (RD) with respect to the first partial laminated core (54).

3. Stator/rotor device according to Claim 1,
- **characterized in that**
- the first partial laminated core (54) has third individual laminations (12.31) with first outwardly or inwardly open recesses (50), which are arranged in the respective slot base of the winding slot (16) in a first predefined screen angle dimension (R1) in the circumferential direction (U),
- the second partial laminated core (56) has fourth individual laminations (12.41) with second inwardly or outwardly open recesses (52), which are arranged in a second predefined screen angle dimension (R2) with respect to the slot base in the circumferential direction (U),
- wherein the first and the second screen angle dimension (R1, R2) correspond to one or multiple predefined screen angle dimensions (R) of the winding slot (16),
- the second partial laminated core (56) is positioned in the circumferential direction (U) with respect to the first partial laminated core (54) such that the first and second recesses (50, 52) overlap in certain regions as seen from above.

4. Stator/rotor device according to Claim 2 or 3,
- **characterized in that**
- the first and the second screen angle dimension (R1, R2) and the differential screen angle dimension (RD) corresponds to one, two or multiple screen angle dimensions (R) of the winding slot (16).

5. Stator/rotor device according to Claim 2,
- **characterized in that**
- the first individual laminations (12) in the slot base have at least one outwardly/inwardly open flow channel recess (60),
- the second individual laminations (12.21, 12.22) in the slot bases that do not have a first recess (50) likewise have a flow channel recess (60),
- with the result that, when first and second individual laminations (12.21, 12.22) are stacked on top of one another, a continuous flow channel (26) which runs in the longitudinal direction (L) and communicates with the runner (28) is produced.

6. Stator/rotor device according to Claim 3,
- **characterized in that**
- the first individual laminations (12) in the slot base have at least one outwardly/inwardly open flow channel recess (60),
- the fourth individual laminations (12.41) in the slot base have at least one outwardly/inwardly open flow channel recess (60),
- with the result that, when first, third and fourth individual laminations (12.21, 12.31, 12.41) are stacked on top of one another, a flow channel (26) which is continuous in the longitudinal direction (L) and communicates with the runner (28) is produced in the slot base.

7. Stator/rotor device according to one or more of Claims 3, 4 and 6,
- **characterized in that**
- the first individual laminations (12) have closed recesses (62) in the connecting web between the projections in the circumferential direction (U) in a one or more screen angle dimensions (R), which closed recesses form an injection-moulding flow through-channel (27), running continuously in the longitudinal direction (L), when the first, third and fourth individual laminations (12, 12.31, 12.41) are stacked on top of one another, which injection-moulding flow through-channel communicates with the runner (28), which runs in the radial direction (r) and is formed by the first and second recesses (50, 52) of the third and fourth individual laminations (12.31, 12.41) stacked on top of one another, in the longitudinal direction (L).

8. Stator/rotor device according to one or more of the preceding claims,
- **characterized in that**,
- for the purpose of forming the runners (28) when the second, third and fourth individual laminations are stacked on top of one another, the first and second recesses (50, 52), seen from above, have a U-shaped or trapezoidal circumferential structure with the depth (t1, t2) and a selected opening width (b).

9. Stator/rotor device according to one or more of the preceding claims,
- **characterized in that**
- the number of second, third and/or fourth individual laminations (12.21, 12.22, 12.31, 12.41) stacked on top of one another is selected such that the height (h), determined by the number of the individual laminations stacked on top of one another, of the runner (28) formed substantially corresponds to its width (b).

10. Stator/rotor device according to one or more of the preceding claims,
- **characterized in that**
- the winding slots (16) are in the form of slots running in a straight line or obliquely in the longitudinal direction (L).

11. Stator/rotor device according to one or more of the preceding claims,
- **characterized in that**
- the runner/s (28) is/are present in the upper and/or lower end face region and/or in the central region of the stator/rotor assembly.

12. Stator/rotor device according to Claim 5 or 6,
- **characterized in that**
- the flow channel recesses/es (60) each has/have a concave circumferential contour.

13. Stator/rotor device according to Claim 2,
- **characterized in that**
- the flow channel recess (22) has a polygon-like circumferential contour or a circumferential contour in the shape of part of a circle.

14. Stator/rotor device according to Claim 7,
- **characterized in that**
- at least one flow channel (26) is present at multiple or all of the winding slots (16).

15. Stator/rotor device according to one or more of Claims 8 to 11,
- **characterized in that**
- the maximum depth of the flow channel recess (22) is one time or multiple times the thickness of the plastics layer (18).

16. Stator/rotor device according to Claim 7,
- **characterized in that**
- the closed recess (62) has a circular circumferential contour.

17. Stator/rotor device according to Claim 7 or 16,
- **characterized in that**
- the closed recesses (62) are spaced apart in the circumferential direction (U) in one or multiple screen angle dimensions (R) of the winding slot (16).

18. Stator/rotor device according to one or more of the preceding claims,
- **characterized in that**
- multiple first and second partial laminated cores (54, 56) are present stacked on top of one another.

19. Stator/rotor device according to one or more of the preceding claims,
- **characterized in that**
- the plastics layer (30) consists of thermoplastic material or thermosetting plastic.

20. Method for producing a plastics coating for a stator/rotor device (10.1, 10.2, 10.3, 10.4) comprising the following features:
- at least one or more stator/rotor assembly/assemblies (10.1, 10.2, 10.3) stacked on top of one another, wherein
-- the stator/rotor assemblies (10.1, 10.2, 10.3) is/are each in the form of a component which is rotationally symmetrical in relation to an axis of rotation (D),
- having a central inner recess (13) and having first individual laminations (12.1) each stacked on top of one another,
-- the first individual laminations (12.1) have a rotationally symmetrical circumferential contour with projections that are spaced apart in the circumferential direction (U) in a predefined screen angle dimension (R) and, when stacked on top of one another, form inwardly or outwardly pointing pole shoes (14) around each of which an electrically conductive conductor is wound, and
-- respective winding slots (16) are present between the pole shoes (14) in the predefined screen angle dimension (R),
-- at least the inner circumferential contour of each winding slot (16) and the top side and bottom side of the pole shoes (14) has an electrically insulating, injection moulded plastics layer,
wherein
- the stator/rotor assembly (10) has at least one first partial laminated core (54) with multiple individual laminations (12.21, 12.22, 12.31, 12.41), which are arranged on top of one another and have at least one first outwardly/inwardly open recess (50), with a first depth (t1) in the radial direction (r), in the outwardly/inwardly facing inner region of the slot base of the winding slot (16), wherein the first recesses (50) of each individual lamination of the first partial laminated core (54) are arranged congruently on top of one another,
- wherein the stator/rotor assembly (10) has a second partial laminated core (56), which is arranged on the top side or the bottom side of the first partial laminated core (54) and has multiple individual laminations (12.21, 12.22, 12.31, 12.41) that are arranged on top of one another and have at least one further inwardly/outwardly open recess (52), having a second depth (t2) in the radial direction, in the region opposite the slot base of the winding slot (16), that is to say the region facing the inner recess (13) or facing outwards, wherein the second recesses (52) of each individual lamination of the second partial laminated core (56) are arranged congruently on top of one another,
- wherein the first and the second partial laminated core (54, 56) are arranged in relation to one another such that the first and second recesses (50, 52) are arranged at the same circumferential angular position, and the depths (t1) and (t2) of the first and second recesses (50, 52) are large enough that the first and second recesses (50, 52) overlap in certain regions as seen from above, with the result that a step-shaped runner (28), which is continuous from the inside outwards or from the outside inwards, for the plastics layer (18) is formed,
- wherein first individual laminations without first and second recesses (50, 52) are arranged above or below the first and/or the second partial laminated core (54, 56),
- **characterized in that**,
- after introducing the individual laminations (12.11, 12.12, 12.21, 12.22, 12.31, 12.41, 12.51, 12.61, 12.71, 12.81) or individual laminated cores (54, 56) into an injection moulding tool, the plastic is injected in through the step-shaped runners (28).

21. Method for producing a plastics coating for a stator/rotor device (10.1, 10.2, 10.3, 10.4) comprising the following features:
- at least one or more stator/rotor assembly/assemblies (10.1, 10.2, 10.3) stacked on top of one another, wherein
-- the stator/rotor assemblies (10.1, 10.2, 10.3) is/are each in the form of a component which is rotationally symmetrical in relation to an axis of rotation (D),
- having a central inner recess (13) and having first individual laminations (12.1) each stacked on top of one another,
-- the first individual laminations (12.1) have a rotationally symmetrical circumferential contour with projections that are spaced apart in the circumferential direction (U) in a predefined screen angle dimension (R) and, when stacked on top of one another, form inwardly or outwardly pointing pole shoes (14) around each of which an electrically conductive conductor is wound, and
-- respective winding slots (16) are present between the pole shoes (14) in the predefined screen angle dimension (R),
-- at least the inner circumferential contour of each winding slot (16) and the top side and bottom side of the pole shoes (14) has an electrically insulating, injection moulded plastics layer,
wherein
- the stator/rotor assembly (10) has at least one first partial laminated core (54) with multiple individual laminations (12.21, 12.22, 12.31, 12.41), which are arranged on top of one another and have at least one first outwardly/inwardly open recess (50), with a first depth (t1) in the radial direction (r), in the outwardly/inwardly facing inner region of the slot base of the winding slot (16), wherein the first recesses (50) of each individual lamination of the first partial laminated core (54) are arranged congruently on top of one another,
- wherein the stator/rotor assembly (10) has a second partial laminated core (56), which is arranged on the top side or the bottom side of the first partial laminated core (54) and has multiple individual laminations (12.21, 12.22, 12.31, 12.41) that are arranged on top of one another and have at least one further inwardly/outwardly open recess (52), having a second depth (t2) in the radial direction, in the region opposite the slot base of the winding slot (16), that is to say the region facing the inner recess (13) or facing outwards, wherein the second recesses (52) of each individual lamination of the second partial laminated core (56) are arranged congruently on top of one another,
- wherein the first and the second partial laminated core (54, 56) are arranged in relation to one another such that the first and second recesses (50, 52) are arranged at the same circumferential angular position, and the depths (t1) and (t2) of the first and second recesses (50, 52) are large enough that the first and second recesses (50, 52) overlap in certain regions as seen from above, with the result that a step-shaped runner (28), which is continuous from the inside outwards or from the outside inwards, for the plastics layer (18) is formed,
- wherein first individual laminations without first and second recesses (50, 52) are arranged above or below the first and/or the second partial laminated core (54, 56),
- the first individual laminations (12) in the slot base have at least one outwardly/inwardly open flow channel recess (60),
- the second individual laminations (12.21, 12.22) in the slot bases that do not have a first recess (50) likewise have a flow channel recess (60),
- with the result that, when first and second individual laminations (12.21, 12.22) are stacked on top of one another, a continuous flow channel (26) which runs in the longitudinal direction (L) and communicates with the runner (28) is produced,
- **characterized in that**,
- after introducing the individual laminations (12.11, 12.12, 12.21, 12.22, 12.31, 12.41, 12.51, 12.61, 12.71, 12.81) or individual laminated cores (54, 56) into an injection moulding tool, the plastic is injected in through the step-shaped runners (28) and the continuous flow channels (26) connected to the step-shaped runners (28) .

## Revendications

1. Dispositif formant stator/rotor destiné à des moteurs électriques, ledit dispositif comprenant
- au moins un ou plusieurs organes feuilletés de stator/rotor (10.1, 10.2, 10.3) empilés les uns sur les autres,
-- les organes feuilletés de stator/rotor (10.1, 10.2, 10.3) étant réalisés chacun sous la forme d'un composant à symétrie de révolution par rapport à un axe de rotation (D),
- un évidement intérieur central (13) et des premières tôles individuelles (12.1) empilées les unes sur les autres,
-- les premières tôles individuelles (12.1) présentant un contour périphérique à symétrie de révolution pourvu d'organes saillants qui sont disposés de manière espacée dans la direction périphérique (U) suivant un pas angulaire spécifié (R) et qui, lorsqu'ils sont empilés les uns sur les autres, forment des pièces polaires (14) qui pointent vers l'intérieur ou vers l'extérieur et qui sont chacune entourées d'un conducteur de courant électriquement conducteur et
-- des rainures d'enroulement (16) étant ménagées entre les pièces polaires (14) suivant un pas angulaire spécifié (R),
-- au moins le contour périphérique intérieur de chaque rainure d'enroulement (16) et le côté supérieur et le côté inférieur des pièces polaires (14) comportant une couche de matière synthétique projetée électriquement isolante,
- l'organe feuilleté de stator/rotor (10) comportant au moins une première partie feuilletée (54) qui est pourvue de plusieurs tôles individuelles (12.21, 12.22, 12.31, 12.41) disposées les unes sur les autres et qui comporte dans la région intérieure, pointant vers l'extérieur/intérieur, du fond de la rainure d'enroulement (16) au moins un premier évidement (50) ouvert vers l'extérieur/l'intérieur et ayant une première profondeur (t1) dans la direction radiale (r), les premiers évidements (50) de chaque tôle individuelle de la première partie feuilletée (54) étant disposés de manière congruente les uns sur les autres,
- l'organe feuilleté de stator/rotor (10) comportant une deuxième partie feuilletée (56) qui est disposée du côté supérieur ou du côté inférieur de la première partie feuilletée (54), qui est pourvue de plusieurs tôles individuelles (12.21, 12.22, 12.31, 12.41) disposées les unes sur les autres et qui comporte dans la région opposée au fond de la rainure d'enroulement (16), c'est-à-dire vers l'évidement intérieur (13) ou vers l'extérieur, au moins un autre évidement (52) ouvert vers l'intérieur/l'extérieur et ayant une deuxième profondeur (t2) dans la direction radiale, les deuxièmes évidements (52) de chaque tôle individuelle de la deuxième partie feuilletée (56) étant disposés de manière congruente les uns sur les autres,
- les première et deuxième parties feuilletées (54, 56) étant disposées l'une par rapport à l'autre de sorte que les premiers et deuxièmes évidements (50, 52) soient disposés à la même position angulaire périphérique et les profondeurs (t1) et (t2) des premiers et deuxièmes évidements (50, 52) étant dimensionnées de sorte que les premiers et deuxièmes évidements (50, 52) se chevauchent par zones en vue de dessus de façon à former un conduit d'injection étagé (28) qui va continument de l'intérieur vers l'extérieur ou de l'extérieur vers l'intérieur et est destiné à la couche de matière synthétique (18),
- des premières tôles individuelles sans premiers ni deuxièmes évidements (50, 52) étant disposées au-dessus ou au-dessous des premières et/ou deuxièmes parties feuilletées (54, 56).

2. Dispositif formant stator/rotor selon la revendication 1,
- **caractérisé en ce que**
- les tôles individuelles sont conçues comme des deuxièmes tôles individuelles (12.21, 12.22) qui forment les première et deuxième parties feuilletées (54, 56), les premiers et deuxièmes évidements (50, 52) étant chacun présents au niveau d'une tôle individuelle, les premiers évidements (50) étant disposés suivant un premier pas angulaire (R1) dans la direction périphérique radiale, les deuxièmes évidements (52) étant disposés suivant un deuxième pas angulaire (R2) dans la direction périphérique (U), les premier et deuxièmes évidements (50,52) étant disposés en alternance à l'extérieur et à l'intérieur suivant un pas angulaire différentiel (RD) et les premier et deuxième pas angulaire (R1 et R2) correspondant à deux fois ou plusieurs fois le pas angulaire (R) de la rainure d'enroulement (16) et le pas angulaire différentiel (RD) correspondant à une ou plusieurs fois le pas angulaire spécifié (R) de la rainure d'enroulement (16),
- la deuxième partie feuilletée (56) étant disposée en étant tournée du pas angulaire différentiel (RD) par rapport à la première partie feuilletée (54).

3. Dispositif formant stator/rotor selon la revendication 1,
- **caractérisé en ce que**
- la première partie feuilletée (54) comporte des troisièmes tôles individuelles (12.31) pourvues de premiers évidements (50) ouverts vers l'extérieur ou vers l'intérieur qui sont disposés dans le fond de la rainure d'enroulement (16) suivant un premier pas angulaire spécifié (R1) dans la direction périphérique (U),
- la deuxième partie feuilletée (56) comporte des quatrièmes tôles individuelles (12.41) pourvues de deuxièmes évidements ouverts vers l'intérieur ou vers l'extérieur (52) qui sont disposés par rapport au fond de la rainure suivant un deuxième pas angulaire spécifié (R2) dans la direction périphérique (U),
- les premier et deuxième pas angulaires (R1, R2) correspondant à une fois ou plusieurs fois le pas angulaire spécifié (R) de la rainure d'enroulement (16),
- la deuxième partie feuilletée (56) étant positionnée par rapport à la première partie feuilletée (54) dans la direction périphérique (U) de sorte que les premiers et deuxièmes évidements (50, 52) se chevauchent par zones en vue de dessus.

4. Dispositif formant stator/rotor selon la revendication 2 ou 3,
- **caractérisé en ce que**
- les premier et deuxième pas angulaires (R1, R2) et le pas angulaire différentiel (RD) correspondent à une, deux fois ou plusieurs fois le pas angulaire (R) de la rainure d'enroulement (16).

5. Dispositif formant stator/rotor selon la revendication 2,
- **caractérisé en ce que**
- les premières tôles individuelles (12) comportent au moins un évidement de conduit d'écoulement ouvert vers l'extérieur/vers l'intérieur (60) dans le fond de la rainure,
- les deuxièmes tôles individuelles (12.21, 12.22) comportent également un évidement de conduit d'écoulement (60) dans les fonds de rainure qui n'ont pas de premier évidement (50),
- de sorte que, dans le cas de tôles individuelles (12,21, 12.22) empilées les unes sur les autres, il résulte un conduit d'écoulement continu (26) qui s'étend dans la direction longitudinale (L) et qui est en communication avec le conduit d'injection (28).

6. Dispositif formant stator/rotor selon la revendication 3,
- **caractérisé en ce que**
- les premières tôles individuelles (12) comportent au moins un évidement de conduit d'écoulement (60) ouvert vers l'extérieur/l'intérieur dans le fond de la rainure,
- les quatrièmes tôles individuelles (12.41) comportent au moins un évidement de conduit d'écoulement (60) ouvert vers l'extérieur/l'intérieur dans le fond de la rainure,
- de sorte que, dans le cas de premières, troisièmes et quatrième tôles individuelles (12.21, 12.31, 12.41) empilées les unes sur les autres, il résulte dans le fond de la rainure un conduit d'écoulement (26) continu dans la direction longitudinale (L) qui est en communication avec le conduit d'injection (28).

7. Dispositif formant stator/rotor selon une ou plusieurs des revendications 3, 4, 6,
- **caractérisé en ce que**
- les premières tôles individuelles (12) comportent des évidements fermés (62) qui sont ménagés dans la direction périphérique (U) dans la nervure de liaison entre les unités saillantes suivant un pas angulaire simple ou multiple (R) et qui, dans le cas de première, troisième et quatrième tôles (12, 12.31, 12.41) empilées les unes sur les autres, forment un conduit d'écoulement et d'injection traversant (27) qui s'étend continûment dans la direction longitudinale (L) et qui est en communication dans la direction longitudinale (L) avec le conduit d'injection qui s'étend dans la direction radiale (r) et qui est formé par les premiers et deuxièmes évidements (50, 52) des troisièmes et quatrièmes tôles individuelles (12.31, 12.41) empilées les unes sur les autres (28).

8. Dispositif formant stator/rotor selon une ou plusieurs des revendications précédentes,
- **caractérisé en ce que**
- pour former les conduits d'injection (28) lorsque les deuxièmes, troisièmes et quatrièmes tôles individuelles sont empilées les unes sur les autres, les premiers et deuxièmes évidements (50, 52) présentent en vue de dessus une structure périphérique en forme de U ou de trapèze ayant une profondeur (t1, t2) et une largeur d'ouverture choisie (b).

9. Dispositif formant stator/rotor selon une ou plusieurs des revendications précédentes,
- **caractérisé en ce que**
- le nombre de deuxièmes, troisièmes ou quatrièmes tôles individuelles (12.21, 12.22, 12.31, 12.41) empilées les unes sur les autres est choisi de telle sorte que la hauteur (h) du conduit d'injection (28), qui est déterminée par le nombre de tôles individuelles empilées les unes sur les autres, corresponde sensiblement à sa largeur (b).

10. Dispositif formant stator/rotor selon une ou plusieurs des revendications précédentes,
- **caractérisé en ce que**
- les rainures d'enroulement (16) sont conçues comme des rainures droites ou obliques dans la direction longitudinale (L).

11. Dispositif formant stator/rotor selon une ou plusieurs des revendications précédentes,
- **caractérisé en ce que**
- le conduit d'injection/les conduits d'injection (28) sont présents dans la région de bord frontale supérieure et/ou inférieure et/ou dans la région médiane de l'organe feuilleté de stator/rotor.

12. Dispositif formant stator/rotor selon la revendication 5 ou 6,
- **caractérisé en ce que**
- le ou les évidements de conduit d'écoulement (60) présentent chacun un contour périphérique concave.

13. Dispositif formant stator/rotor selon la revendication 2,
- **caractérisé en ce que**
- l'évidement de conduit d'écoulement (22) présente un contour périphérique polygonal ou partiellement circulaire.

14. Dispositif formant stator/rotor selon la revendication 7,
- **caractérisé en ce que**
- au moins un conduit d'écoulement (26) est présent au niveau de plusieurs rainures d'enroulement ou de toutes les rainures d'enroulement (16).

15. Dispositif formant stator/rotor selon une ou plusieurs des revendications précédentes 8 à 11,
- **caractérisé en ce que**
- la profondeur maximale de l'évidement de conduit d'écoulement (22) est égale à une ou plusieurs fois l'épaisseur de la couche de matière synthétique (18).

16. Dispositif formant stator/rotor selon la revendication 7,
- **caractérisé en ce que**
- l'évidement fermé (62) présente un contour périphérique circulaire.

17. Dispositif formant stator/rotor selon la revendication 7 ou 16,
- **caractérisé en ce que**
- les évidements fermés (62) sont disposés de manière espacée suivant un pas angulaire simple ou multiple (R) de la rainure d'angle (16) dans la direction périphérique (U) .

18. Dispositif formant stator/rotor selon une ou plusieurs des revendications précédentes,
- **caractérisé en ce que**
- plusieurs premières et deuxièmes parties feuilletées (54, 56) sont empilées les unes sur les autres.

19. Dispositif formant stator/rotor selon une ou plusieurs des revendications précédentes,
- **caractérisé en ce que**
- la couche de matière synthétique (30) est en matière synthétique thermoplastique ou thermodurcissable.

20. Procédé de réalisation d'un revêtement de matière synthétique d'un dispositif formant stator/rotor (10.1, 10.2, 10.3, 10.4) qui présente les caractéristiques suivantes :
- au moins un ou plusieurs organes feuilletés de stator/rotor (10.1, 10.2, 10.3) empilés les uns sur les autres,
-- les organes feuilletés de stator/rotor (10.1, 10.2, 10.3) étant réalisés chacun sous la forme d'un composant à symétrie de révolution par rapport à un axe de rotation (D),
- un évidement intérieur central (13) et des premières tôles individuelles (12.1) empilées les unes sur les autres,
-- les premières tôles individuelles (12.1) présentant un contour périphérique à symétrie de révolution pourvu d'organes saillants qui sont disposés de manière espacée dans la direction périphérique (U) suivant un pas angulaire spécifié (R) et qui, lorsqu'ils sont empilés les uns sur les autres, forment des pièces polaires (14) qui pointent vers l'intérieur ou vers l'extérieur et qui sont chacune entourées d'un conducteur de courant électriquement conducteur et
-- des rainures d'enroulement (16) étant ménagées entre les pièces polaires (14) suivant un pas angulaire spécifié (R),
-- au moins le contour périphérique intérieur de chaque rainure d'enroulement (16) et le côté supérieur et le côté inférieur des pièces polaires (14) comportant une couche de matière synthétique projetée électriquement isolante,
- l'organe feuilleté de stator/rotor (10) comportant au moins une première partie feuilletée (54) qui est pourvue de plusieurs tôles individuelles (12.21, 12.22, 12.31, 12.41) disposées les unes sur les autres et qui comporte dans la région intérieure, pointant vers l'extérieur/intérieur, du fond de la rainure d'enroulement (16) au moins un premier évidement (50) ouvert vers l'extérieur/l'intérieur et ayant une première profondeur (t1) dans la direction radiale (r), les premiers évidements (50) de chaque tôle individuelle de la première partie feuilletée (54) étant disposés de manière congruente les uns sur les autres,
- l'organe feuilleté de stator/rotor (10) comportant une deuxième partie feuilletée (56) qui est disposée du côté supérieur ou du côté inférieur de la première partie feuilletée (54), qui est pourvue de plusieurs tôles individuelles (12.21, 12.22, 12.31, 12.41) disposées les unes sur les autres et qui comporte dans la région opposée au fond de la rainure d'enroulement (16), c'est-à-dire vers l'évidement intérieur (13) ou vers l'extérieur, au moins un autre évidement (52) ouvert vers l'intérieur/l'extérieur et ayant une deuxième profondeur (t2) dans la direction radiale, les deuxièmes évidements (52) de chaque tôle individuelle de la deuxième partie feuilletée (56) étant disposés de manière congruente les uns sur les autres,
- les première et deuxième parties feuilletées (54, 56) étant disposées l'une par rapport à l'autre de sorte que les premiers et deuxièmes évidements (50, 52) soient disposés à la même position angulaire périphérique et les profondeurs (t1) et (t2) des premiers et deuxièmes évidements (50, 52) étant dimensionnées de sorte que les premiers et deuxièmes évidements (50, 52) se chevauchent par zones en vue de dessus de façon à former un conduit d'injection étagé (28) qui va continument de l'intérieur vers l'extérieur ou de l'extérieur vers l'intérieur et est destiné à la couche de matière synthétique (18),
- des premières tôles individuelles sans premiers ni deuxièmes évidements (50, 52) étant disposées au-dessus ou au-dessous des premières et/ou deuxièmes parties feuilletées (54, 56),
- **caractérisé en ce que**
- après l'introduction des tôles individuelles (12.11, 12.12, 12.21, 12.22, 12.31, 12.41, 12.51, 12.61, 12.71, 12.81) ou des parties feuilletées (54, 56) dans un moule d'injection, la matière synthétique est injectée par le biais des conduits d'injection étagés (28).

21. Procédé de réalisation d'un revêtement de matière synthétique d'un dispositif formant stator/rotor (10.1, 10.2, 10.3, 10.4) qui présente les caractéristiques suivantes :
- au moins un ou plusieurs organes feuilletés de stator/rotor (10.1, 10.2, 10.3) empilés les uns sur les autres,
-- les organes feuilletés de stator/rotor (10.1, 10.2, 10.3) étant réalisés chacun sous la forme d'un composant à symétrie de révolution par rapport à un axe de rotation (D),
- un évidement intérieur central (13) et des premières tôles individuelles (12.1) empilées les unes sur les autres,
-- les premières tôles individuelles (12.1) présentant un contour périphérique à symétrie de révolution pourvu d'organes saillants qui sont disposés de manière espacée dans la direction périphérique (U) suivant un pas angulaire spécifié (R) et qui, lorsqu'ils sont empilés les uns sur les autres, forment des pièces polaires (14) qui pointent vers l'intérieur ou vers l'extérieur et qui sont chacune entourées d'un conducteur de courant électriquement conducteur et
-- des rainures d'enroulement (16) étant ménagées entre les pièces polaires (14) suivant un pas angulaire spécifié (R),
-- au moins le contour périphérique intérieur de chaque rainure d'enroulement (16) et le côté supérieur et le côté inférieur des pièces polaires (14) comportant une couche de matière synthétique projetée électriquement isolante,
- l'organe feuilleté de stator/rotor (10) comportant au moins une première partie feuilletée (54) qui est pourvue de plusieurs tôles individuelles (12.21, 12.22, 12.31, 12.41) disposées les unes sur les autres et qui comporte dans la région intérieure, pointant vers l'extérieur/intérieur, du fond de la rainure d'enroulement (16) au moins un premier évidement (50) ouvert vers l'extérieur/l'intérieur et ayant une première profondeur (t1) dans la direction radiale (r), les premiers évidements (50) de chaque tôle individuelle de la première partie feuilletée (54) étant disposés de manière congruente les uns sur les autres,
- l'organe feuilleté de stator/rotor (10) comportant une deuxième partie feuilletée (56) qui est disposée du côté supérieur ou du côté inférieur de la première partie feuilletée (54), qui est pourvue de plusieurs tôles individuelles (12.21, 12.22, 12.31, 12.41) disposées les unes sur les autres et qui comporte dans la région opposée au fond de la rainure d'enroulement (16), c'est-à-dire vers l'évidement intérieur (13) ou vers l'extérieur, au moins un autre évidement (52) ouvert vers l'intérieur/l'extérieur et ayant une deuxième profondeur (t2) dans la direction radiale, les deuxièmes évidements (52) de chaque tôle individuelle de la deuxième partie feuilletée (56) étant disposés de manière congruente les uns sur les autres,
- les première et deuxième parties feuilletées (54, 56) étant disposées l'une par rapport à l'autre de sorte que les premiers et deuxièmes évidements (50, 52) soient disposés à la même position angulaire périphérique et les profondeurs (t1) et (t2) des premiers et deuxièmes évidements (50, 52) étant dimensionnées de sorte que les premiers et deuxièmes évidements (50, 52) se chevauchent par zones en vue de dessus de façon à former un conduit d'injection étagé (28) qui va continument de l'intérieur vers l'extérieur ou de l'extérieur vers l'intérieur et est destiné à la couche de matière synthétique (18),
- des premières tôles individuelles sans premiers ni deuxièmes évidements (50, 52) étant disposées au-dessus ou au-dessous des premières et/ou deuxièmes parties feuilletées (54, 56),
- les premières tôles individuelles (12) comportant au moins un évidement de conduit d'écoulement ouvert vers l'extérieur/vers l'intérieur (60) dans le fond de la rainure,
- les deuxièmes tôles individuelles (12.21, 12.22) comportant également un évidement de conduit d'écoulement (60) dans les fonds de rainure qui n'ont pas de premier évidement (50),
- de sorte que, dans le cas de tôles individuelles (12,21, 12.22) empilées les unes sur les autres, il résulte un conduit d'écoulement continu (26) qui s'étend dans la direction longitudinale (L) et qui est en communication avec le conduit d'injection (28),
- **caractérisé en ce que**
- après l'introduction des tôles individuelles (12.11, 12.12, 12.21, 12.22, 12.31, 12.41, 12.51, 12.61, 12.71, 12.81) ou des parties feuilletées (54, 56) dans un moule d'injection, la matière synthétique est injectée par le biais des conduits d'injection étagés (28) et les conduits d'écoulement continu (26) faisant suite aux conduits d'injection étagés (28).
